# FASCICULE DE BREVET EUROPEEN

(11) **EP 3 030 799 B1**
(45) Date de publication et mention de la délivrance du brevet: **13.09.2017**
(21) Numéro de dépôt: 14747093.4
(22) Date de dépôt: 10.07.2014
(51) Int. Cl.: F16D 13/75, F16D 21/06

(54) **DISPOSITIF D'EMBRAYAGE A RATTRAPAGE D'USURE, NOTAMMENT POUR VEHICULE AUTOMOBILE**
KUPPLUNGSVORRICHTUNG MIT VERSCHLEISSKOMPENSATION, INSBESONDERE FÜR EIN KRAFTFAHRZEUG
CLUTCH DEVICE WITH WEAR COMPENSATION, IN PARTICULAR FOR A MOTOR VEHICLE

(30) Priorité: 08.08.2013 FR 1357891
(43) Date de publication de la demande: 15.06.2016
(73) Titulaire: Valeo Embrayages, 80009 Amiens Cedex 2 (FR)
(72) Inventeur: MAUREL, Hervé, 80000 Amiens (FR); LEBAS, Gilles, 80800 Villers Bretonneux (FR); LEBEAU, Fabien, 02100 Harly (FR); LAURIDSEN, Carsten, 60000 Beauvais (FR)
(74) Mandataire: Cardon, Nicolas
(86) Numéro de dépôt international: PCT/FR2014/051773
(87) Numéro de publication internationale: WO 2015/018997

(56) Documents cités:
- FR-A1- 2 726 872
- FR-A1- 2 780 119
- FR-A1- 2 815 098

## Description

La présente invention concerne un dispositif d'embrayage à rattrapage d'usure, notamment pour véhicule automobile.

Un dispositif d'embrayage comporte classiquement un plateau de réaction, un plateau de pression mobile et un disque de friction monté entre lesdits plateaux de réaction et de pression. Le mouvement du plateau de pression est commandé par un diaphragme, lui-même commandé par une butée d'embrayage.

La butée d'embrayage est commandée par un actionneur piloté par un calculateur électronique afin d'exercer une force prédéterminée sur le diaphragme et de le déplacer sur une distance donnée.

Le plateau de pression est ainsi mobile entre une position d'embrayage dans laquelle le disque de friction est serré entre lesdits plateaux de pression et de réaction, et une position de débrayage dans laquelle le disque de friction est libéré.

L'utilisation du dispositif d'embrayage provoque une usure des garnitures du disque de friction ainsi que des contre-matériaux des plateaux de pression et de réaction associés. Ceci se traduit par une variation de la position du plateau de pression par rapport au diaphragme associé et/ou par rapport au plateau de réaction, générant une variation de l'effort de serrage du disque de friction et une modification du point de léchage et de la course de la butée d'embrayage. On rappelle que le point de léchage est la position à partir de laquelle un couple peut être transmis au travers du dispositif d'embrayage.

Un dispositif d'embrayage à rattrapage d'usure est connu du document FR 2780 119. Ce dispositif comporte un couvercle à l'intérieur duquel est monté un plateau de pression destiné à venir en appui sur un disque de friction, un diaphragme intercalé entre le couvercle et le plateau de pression, servant à l'actionnement du plateau de pression entre une position totalement embrayée dans laquelle ledit plateau de pression est poussé contre le disque de friction, et une position totalement débrayée dans laquelle ledit plateau de pression est écarté du disque de friction par l'intermédiaire de moyens de rappel du plateau de pression.

Des moyens de rattrapage de l'usure du disque de friction sont intercalés entre le diaphragme et le plateau de pression, et comprennent au moins un organe de rattrapage mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position angulaire de la rampe par rapport à la contre-rampe.

Le dispositif comporte en outre des moyens de détection de l'usure aptes à autoriser le déplacement de l'organe mobile des moyens de rattrapage d'usure en cas d'usure du disque de friction et aptes à empêcher un tel déplacement lorsque cette usure n'est pas suffisante, lesdits moyens de détection comportant au moins un organe de détection mobile, dans une plage déterminée, par rapport à l'organe de rattrapage et comportant une rampe coopérant avec une contre-rampe tournée du côté du plateau de pression.

Le dispositif comporte enfin un organe presseur venant contraindre les rampes desdits organes mobiles contre les contre-rampes associées, l'organe presseur étant apte à coopérer avec une butée fixe, de manière à libérer lesdits organes mobiles lorsqu'une usure du disque de friction est détectée.

L'organe de rattrapage mobile est sollicité à l'aide d'un ressort, de façon à rattraper le jeu entre celui-ci et l'organe presseur, lorsque ledit organe de rattrapage mobile est libéré par l'organe presseur et par le diaphragme. Par ailleurs, l'organe de détection mobile est sollicité par un ressort de façon à rattraper le jeu entre celui-ci et l'organe presseur, lorsque ledit organe de détection mobile est libéré par l'organe presseur et par le diaphragme.

En fonctionnement, l'ensemble est soumis, de façon alternée, à des phases successives d'embrayage et de débrayage.

En phase d'embrayage, le diaphragme appuie sur le plateau de pression, par l'intermédiaire de l'organe de rattrapage de jeu. En phase de débrayage, le plateau de pression est rappelé vers sa position de débrayage, par l'intermédiaire de moyens de rappel prenant généralement la forme de languettes élastiquement déformables.

Lorsque le disque de friction n'est pas usé et que les contre-matériaux des plateaux de pression et de réaction ne sont pas usés, l'organe presseur maintient constamment l'organe de détection et l'organe de rattrapage en appui sur le disque de pression : lesdits organes sont immobilisés.

En cas d'usure, l'organe presseur vient en appui sur la butée et un jeu se crée entre l'organe presseur et l'organe de détection. Comme ce dernier est contraint par un ressort, il est déplacé de façon à combler le jeu précité. En position embrayée, l'effort appliqué par le diaphragme sur l'organe de rattrapage empêche le déplacement de ce dernier, par appui et frottement sur le plateau de pression. Ensuite, lorsque le diaphragme est déplacé dans sa position débrayée, les languettes de rappel du plateau de pression tendent à plaquer le plateau de pression contre l'organe de rattrapage de jeu, et l'organe de rattrapage de jeu contre le diaphragme. L'effort exercé par les languettes de rappel est relativement faible de façon à autoriser, malgré les frottements en jeu, un déplacement de l'organe de rattrapage de jeu, sous l'effet de la contrainte appliquée par le ressort correspondant. Ce déplacement permet de rattraper le jeu entre l'organe presseur et l'organe de rattrapage. On rattrape ainsi l'usure du plateau de friction ainsi que l'usure des contre-matériaux des plateaux de pression et de réaction associés.

Un tel fonctionnement nécessite notamment l'utilisation de moyens de rappel du plateau de pression exerçant des efforts relativement faibles, pour permettre le déplacement de l'organe de rattrapage malgré les frottements en jeu. Ceci nuit au fonctionnement car de tels moyens de rappel peuvent transmettre des vibrations axiales et générer des phénomènes de pompage du plateau de pression.

L'invention a notamment pour but d'apporter une solution simple, efficace et économique à ce problème.

A cet effet, elle propose un dispositif d'embrayage à rattrapage d'usure, notamment pour véhicule automobile, comportant un plateau de pression destiné à venir en appui sur un disque de friction du dispositif d'embrayage, un diaphragme servant à l'actionnement du plateau de pression entre une position totalement embrayée dans laquelle ledit plateau de pression est poussé contre le disque de friction, et une position totalement débrayée dans laquelle ledit plateau de pression est écarté du disque de friction par l'intermédiaire de moyens de rappel du plateau de pression,
des moyens de rattrapage de l'usure du disque de friction étant intercalés entre le diaphragme et le plateau de pression, lesdits moyens de rattrapage d'usure comportant au moins un organe de rattrapage mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position de la rampe par rapport à la contre-rampe,
des moyens de détection de l'usure aptes à autoriser le déplacement dudit organe mobile des moyens de rattrapage d'usure en cas d'usure du disque de friction et aptes à empêcher un tel déplacement lorsque cette usure n'est pas suffisante, lesdits moyens de détection comportant au moins un organe de détection mobile, dans une plage déterminée, par rapport à l'organe de rattrapage mobile et comportant une rampe coopérant avec une contre-rampe tournée du côté du plateau de pression,
au moins un organe presseur venant contraindre au moins la rampe de l'organe de détection contre la contre-rampe associée, l'organe presseur étant apte à coopérer avec une butée fixe de manière à libérer lesdits organes mobiles lorsqu'une usure du disque de friction est détectée,
l'organe de rattrapage mobile étant sollicité de façon à se déplacer lorsque ledit organe de rattrapage mobile est libéré par le diaphragme,
l'organe de détection mobile étant sollicité de façon à se déplacer et rattraper, au moins en partie, le jeu entre celui-ci et l'organe presseur, lorsque ledit organe de détection mobile est libéré par l'organe presseur et par le diaphragme,
caractérisé en ce que le diaphragme libère l'organe de détection mobile et empêche le déplacement de l'organe de rattrapage mobile, en position complètement embrayée, et en ce que le diaphragme libère l'organe de rattrapage mobile et empêche le déplacement de l'organe de détection mobile, en position complètement débrayée, le diaphragme venant toujours en appui sur l'un au moins desdits organes mobiles entre ses positions totalement embrayée et totalement débrayée.

De cette manière, les moyens de rappel du plateau de pression peuvent exercer un effort important, cet effort étant repris par l'organe de rattrapage mobile puis par le diaphragme, ou par l'organe de détection mobile puis par le diaphragme, en fonction de la position du diaphragme. En effet, lors de leurs déplacements, lesdits organes mobiles ne sont pas soumis à l'effort exercé par les moyens de rappel du plateau de pression et il est donc possible de solliciter aisément leur déplacement, en cas d'usure.

Comme indiqué précédemment, le fait de disposer de moyens de rappel du plateau de pression exerçant un effort important, tels par exemple que des languettes ressorts ayant une forte raideur, permet de limiter la transmission des vibrations axiales et d'éviter les phénomènes de pompage du plateau de pression.

Selon une caractéristique de l'invention, l'organe de détection mobile se présente sous la forme d'un anneau comportant une extrémité apte à venir en appui sur l'organe presseur et sur le diaphragme, et une extrémité comportant au moins une rampe s'étendant circonférentiellement, coopérant avec la contre-rampe associée tournée du côté du plateau de pression.

Selon une autre caractéristique de l'invention, l'organe de rattrapage mobile se présente sous la forme d'un anneau comportant une extrémité apte à venir en appui sur l'organe presseur et sur le diaphragme, et une extrémité comportant au moins une rampe s'étendant circonférentiellement, coopérant avec la contre-rampe associée tournée du côté du plateau de pression.

Dans ce cas, l'organe de rattrapage mobile et l'organe de détection mobile peuvent être concentriques.

Avantageusement, lesdits organes mobiles peuvent comporter des moyens de butée aptes à limiter le déplacement de l'organe de rattrapage mobile par rapport à l'organe de détection mobile.

Dans ce cas, pour chaque cycle d'embrayage et de débrayage, l'usure maximale pouvant être rattrapée par les moyens de détection et de rattrapage de jeu est limitée et définie par la valeur du déplacement relatif entre lesdits organes mobiles autorisé par lesdits moyens de butée.

Dans ce cas, les moyens de butée peuvent limiter la rotation de l'organe de rattrapage mobile par rapport à l'organe de détection mobile à une plage angulaire déterminée et réciproquement.

De préférence, l'organe de détection mobile et/ou l'organe de rattrapage mobile sont sollicités par des organes élastiques, par exemple des ressorts de traction.

On notera que, le déplacement des organes mobiles n'étant pas tributaire de l'effort exercé par les moyens de rappel du plateau de pression (comme cela est le cas dans l'art antérieur), les raideurs de ces organes élastiques peuvent être relativement faibles. Par voie de conséquence, l'encombrement de ces organes élastiques peut être réduit.

L'organe presseur peut comporter au moins une butée angulaire apte à coopérer avec l'organe de rattrapage mobile et avec l'organe de détection mobile, de manière à assurer le bon positionnement angulaire desdits organes mobiles avant montage de l'ensemble sur le dispositif d'embrayage.

Une telle butée peut également servir de butée de fin de vie du dispositif : on ne compense plus l'usure au-delà d'une certaine valeur.

En outre, le plateau de pression peut comporter au moins une contre-rampe coopérant à la fois avec la rampe de l'organe de détection mobile et avec la rampe de l'organe de rattrapage mobile.

Une telle structure est relativement simple à réaliser et peu onéreuse.

Selon l'invention, l'organe de rattrapage mobile peut être conçu pour être déplacé par rapport à la contre-rampe associée, lorsqu'un effort nul ou quasi-nul, par exemple compris entre 0 et 1000 N, est exercé par le diaphragme sur l'organe de rattrapage mobile.

De manière préférée, le dispositif comporte un couvercle à l'intérieur duquel sont montés, au moins en partie, le plateau de pression et le diaphragme, le diaphragme étant intercalé entre le couvercle et le plateau de pression.

L'invention concerne également un double embrayage, caractérisé en ce qu'il comporte un dispositif du type précité.

Un double embrayage permet notamment de coupler alternativement l'arbre du moteur du véhicule avec deux arbres coaxiaux d'entrée d'une boîte de vitesses, qui peut être du type robotisée.

Ainsi, un double embrayage permet de changer de rapport de vitesses tout en maintenant la transmission d'un couple moteur aux roues du véhicule. En effet, les deux embrayages sont associés respectivement à des rapports de vitesses pairs et impairs. Lors d'un changement de rapport de vitesses, un premier embrayage est débrayé alors que le second embrayage est embrayé, si bien que le couple moteur est transféré progressivement du premier au second embrayage.

Chaque embrayage comprend un mécanisme comportant un diaphragme destiné à coopérer avec un plateau de pression solidaire en rotation du couvercle et de l'arbre du moteur. Chaque diaphragme est déplaçable au moyen d'une butée d'embrayage correspondante, entre une position de repos et une position active. Selon le type d'embrayage, la position active du diaphragme correspond à un couplage ou à un découplage des arbres du moteur et de la boîte de vitesses et la position de repos du diaphragme correspond à un découplage ou un couplage de ces arbres. On parle alors respectivement d'embrayage normalement ouvert et d'embrayage normalement fermé.

Pour des raisons de sécurité, l'un au moins des embrayages est du type normalement ouvert.

La butée d'embrayage est commandée par un actionneur piloté par un calculateur électronique afin d'exercer une force prédéterminée sur le diaphragme et de le déplacer sur une distance donnée.

Le plateau de pression de chaque embrayage, sollicité par le diaphragme correspondant, est destiné à serrer un disque de friction sur un plateau de réaction correspondant. Un plateau de réaction peut être prévu pour chaque embrayage. En variante, on utilise un seul plateau de réaction commun aux deux embrayages, monté entre les deux disques de friction.

Chaque disque de friction est lié en rotation à un arbre d'entrée de la boîte de vitesses et chaque plateau de réaction est par exemple solidaire en rotation d'un volant lié à l'arbre moteur. Ainsi, le serrage d'un disque de friction entre les plateaux de pression et de réaction correspondants permet la transmission d'un couple entre l'arbre moteur et l'arbre de la boîte de vitesses associés.

Comme précédemment, l'utilisation des embrayages provoque une usure des garnitures de friction des disques de friction ainsi que des contre-matériaux des plateaux de pression et de réaction associés. Ceci se traduit par une variation de la position de chaque plateau de pression par rapport au diaphragme associé et/ou au plateau de réaction, générant une variation de l'effort de serrage du disque de friction et une modification du point de léchage et de la course à la butée d'embrayage. Dans ce cas, le point de léchage est la position à partir de laquelle une partie du couple du moteur est transmis à l'arbre de la boîte de vitesses lors de la fermeture de l'embrayage.

De manière générale, une telle usure est plus présente au niveau du disque de friction et des plateaux de pression et de réaction appartenant au premier embrayage, c'est-à-dire à l'embrayage associé aux rapports de vitesses impairs. Ainsi, lorsque le double embrayage ne comporte qu'un seul ensemble selon l'invention, celui-ci forme de préférence une partie du premier embrayage. Bien entendu, le double embrayage selon l'invention peut comporter à la fois un dispositif équipant le premier embrayage et un dispositif équipant le second embrayage.

Dans une forme de réalisation de l'invention, le double embrayage selon l'invention comporte au moins un plateau de réaction destiné à être couplé en rotation à un arbre menant, un premier et un second disque de friction, destinés à être couplés respectivement à un premier et un second arbres menés, un premier et un second plateau de pression, actionnés respectivement par un premier et un second diaphragme de façon à serrer ou libérer le premier et le second disque de friction sur le plateau de réaction, le premier plateau de pression étant relié fixement à un couvercle mobile en translation par rapport au plateau de réaction, et étant actionné par appui du premier diaphragme sur le couvercle mobile,
des premiers moyens de rattrapage de l'usure du premier disque de friction étant intercalés entre le premier diaphragme et le couvercle mobile, lesdits moyens de rattrapage d'usure comportant au moins un premier organe de rattrapage mobile dans une plage déterminée et comportant une rampe coopérant avec une contre-rampe tournée du côté du couvercle mobile, de façon à ajuster la distance entre le premier diaphragme et le premier plateau de pression et compenser l'usure du premier disque de friction en fonction de la position de ladite rampe par rapport à ladite contre-rampe,
des premiers moyens de détection de l'usure aptes à autoriser le déplacement dudit premier organe de rattrape mobile en cas d'usure du premier disque de friction et aptes à empêcher un tel déplacement lorsque cette usure n'est pas suffisante, lesdits premiers moyens de détection comportant au moins un premier organe de détection mobile, dans une plage déterminée, par rapport au premier organe de rattrapage mobile et comportant une rampe coopérant avec une contre-rampe tournée du côté du couvercle mobile,
au moins un premier organe presseur venant contraindre au moins la rampe du premier organe de détection contre la contre-rampe associée, le premier organe presseur étant apte à coopérer avec une butée fixe de manière à libérer lesdits premiers organes mobiles lorsqu'une usure du premier disque de friction est détectée,
le premier organe de rattrapage mobile étant sollicité de façon à se déplacer lorsque ledit premier organe de rattrapage mobile est libéré par le premier diaphragme,
le premier organe de détection mobile étant sollicité de façon à se déplacer et à rattraper, au moins en partie, le jeu entre celui-ci et le premier organe presseur, lorsque ledit premier organe de détection mobile est libéré par le premier organe presseur et par le premier diaphragme,
le premier diaphragme libérant le premier organe de détection mobile et empêchant le déplacement du premier organe de rattrapage mobile, en position complètement embrayée, le premier diaphragme libérant le premier organe de rattrapage mobile et empêchant le déplacement du premier organe de détection mobile, en position complètement débrayée, le premier diaphragme venant toujours en appui sur l'un au moins desdits premiers organes mobiles entre ses positions totalement embrayée et totalement débrayée.

Avantageusement, le double embrayage comporte des seconds moyens de rattrapage de l'usure du second disque de friction, intercalés entre le second diaphragme et le second plateau de pression, lesdits moyens de rattrapage d'usure comportant au moins un second organe de rattrapage mobile dans une plage déterminée et comportant une rampe coopérant avec une contre-rampe tournée du côté du second plateau de pression, de façon à ajuster la distance entre le second diaphragme et le second plateau de pression et compenser l'usure du second disque de friction en fonction de la position de ladite rampe par rapport à ladite contre-rampe,
des seconds moyens de détection de l'usure aptes à autoriser le déplacement dudit second organe de rattrape mobile en cas d'usure du second disque de friction et aptes à empêcher un tel déplacement lorsque cette usure n'est pas suffisante, lesdits seconds moyens de détection comportant au moins un second organe de détection mobile, dans une plage déterminée, par rapport au second organe de rattrapage mobile et comportant une rampe coopérant avec une contre-rampe tournée du côté du second plateau de pression,
au moins un second organe presseur venant contraindre au moins la rampe du second organe de détection contre la contre-rampe associée, le second organe presseur étant apte à coopérer avec une butée fixe de manière à libérer lesdits seconds organes mobiles lorsqu'une usure du second disque de friction est détectée,
le second organe de rattrapage mobile étant sollicité de façon à se déplacer lorsque ledit second organe de rattrapage mobile est libéré par le second diaphragme,
le second organe de détection mobile étant sollicité de façon à se déplacer et à rattraper, au moins en partie, le jeu entre celui-ci et le second organe presseur, lorsque ledit second organe de détection mobile est libéré par le second organe presseur et par le second diaphragme,
le second diaphragme libérant le second organe de détection mobile et empêchant le déplacement du second organe de rattrapage mobile, en position complètement embrayée, le second diaphragme libérant le second organe de rattrapage mobile et empêchant le déplacement du second organe de détection mobile, en position complètement débrayée, le second diaphragme venant toujours en appui sur l'un au moins desdits seconds organes mobiles entre ses positions totalement embrayée et totalement débrayée.

Préférentiellement, chaque butée coopérant avec l'organe presseur correspondant est fixe par rapport au plateau de réaction.

En outre, le double embrayage peut comporter un couvercle en forme de cloche, logeant, au moins en partie, le second disque de friction, le second plateau de pression et/ou le second diaphragme.

Enfin, la périphérie radialement externe du second diaphragme peut être montée axialement entre une rondelle d'appui et le couvercle, chaque butée fixe coopérant avec l'organe presseur correspondant étant formée sur ladite rondelle d'appui.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 à 16 illustrent un dispositif d'embrayage selon une première forme de réalisation, en particulier
- la figure 1 est une vue en perspective et en coupe partielle du dispositif,
- la figure 2 est une vue en coupe axiale du dispositif,
- la figure 3 est une vue en perspective et en coupe partielle d'une partie du dispositif,
- la figure 4 est une vue de face et en coupe partielle d'une partie du dispositif,
- la figure 5 est une vue illustrant schématiquement le fonctionnement du dispositif d'embrayage, lorsque le plateau de pression, le plateau de réaction et le disque de friction ne sont pas usés, en position embrayée du dispositif d'embrayage,
- la figure 6 est une vue illustrant schématiquement une première étape de fonctionnement du dispositif d'embrayage, en cas d'usure de l'un au moins des éléments précités, en position embrayée du dispositif d'embrayage,
- la figure 7 est une vue illustrant la position des moyens de butée de l'organe de rattrapage mobile par rapport à l'organe détection mobile, dans la première étape de fonctionnement,
- les figures 8 et 9, 10 et 11, 12 et 13, 14 et 15 sont des vues correspondant respectivement aux figures 6 et 7, illustrant plusieurs étapes successives de fonctionnement du dispositif d'embrayage,
- la figure 16 est une vue correspondant à la figure 3, illustrant une variante de réalisation de l'invention,
- les figures 17 à 21 illustrent un double embrayage selon l'invention, en particulier

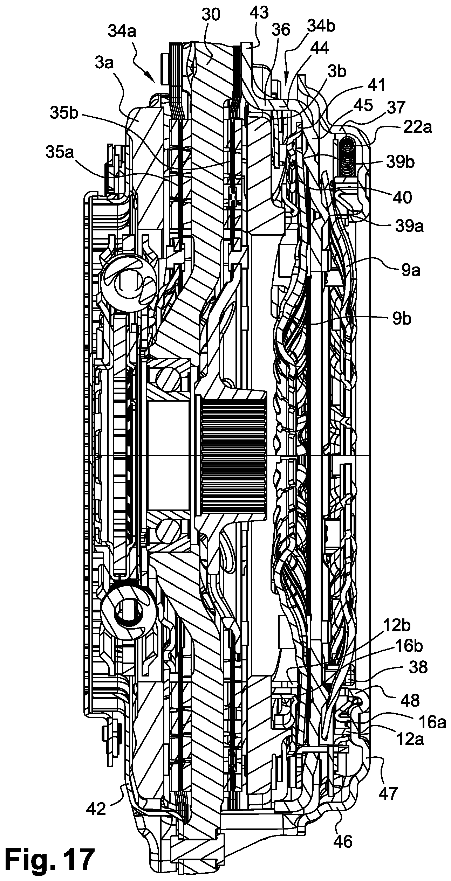

- la figure 17 est une vue en coupe axiale du double embrayage,

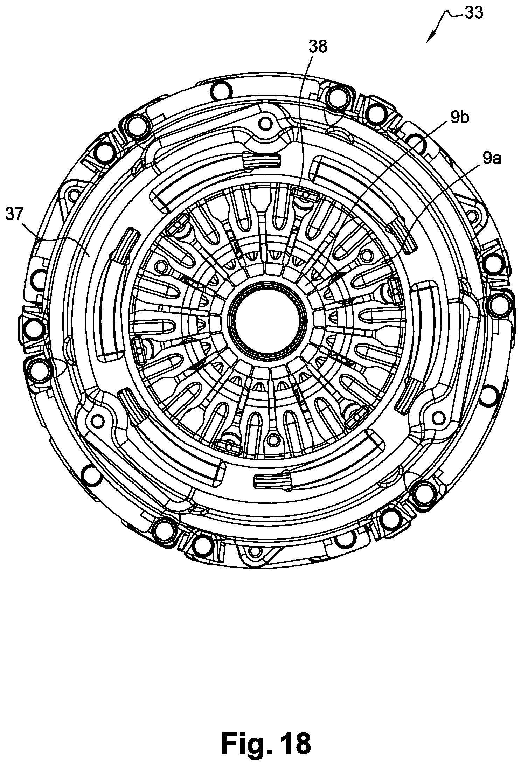

- la figure 18 est une vue de face du double embrayage,

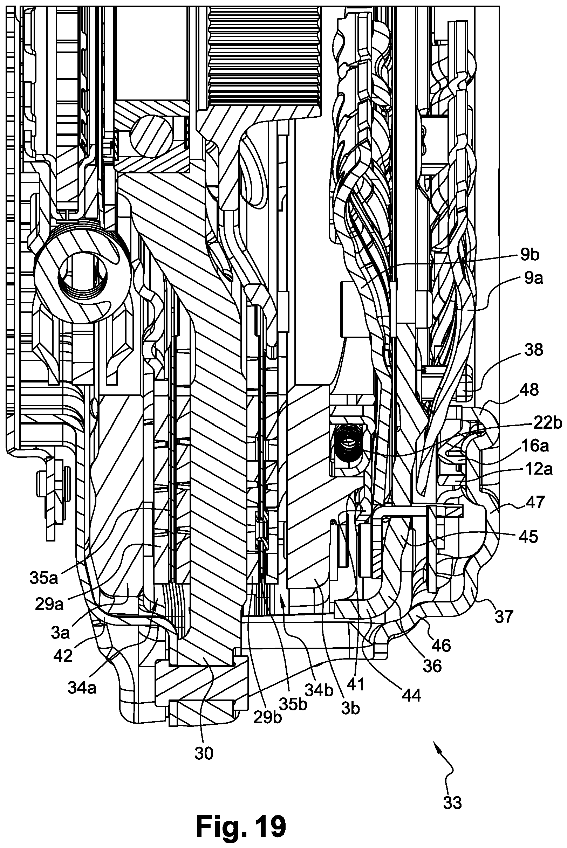

- la figure 19 est une demi-vue en coupe axiale du double embrayage,

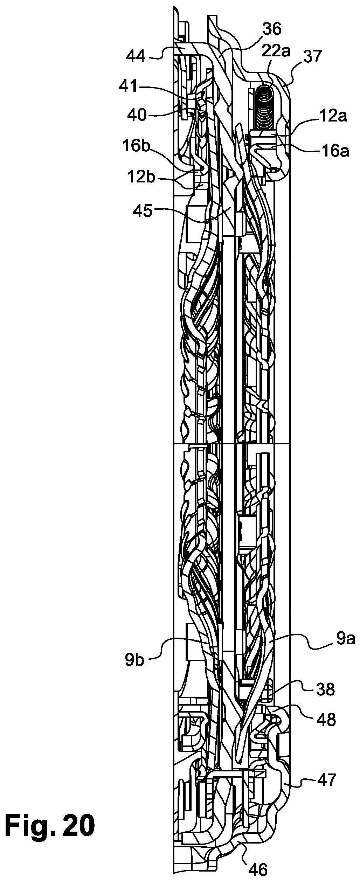

- la figure 20 est une vue en coupe axiale d'une partie du double embrayage,

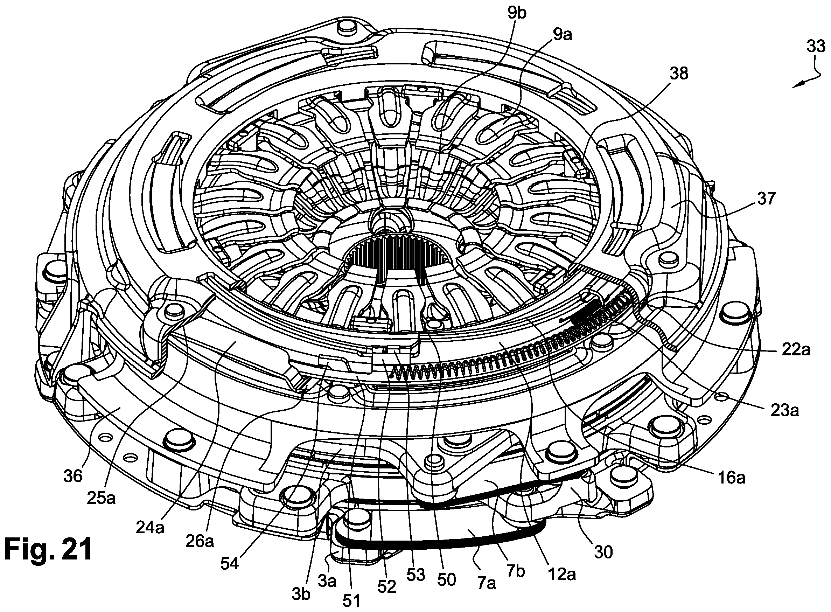

- la figure 21 est une vue en perspective et en coupe partielle, montrant les moyens de rattrapage de jeu équipant le premier embrayage,

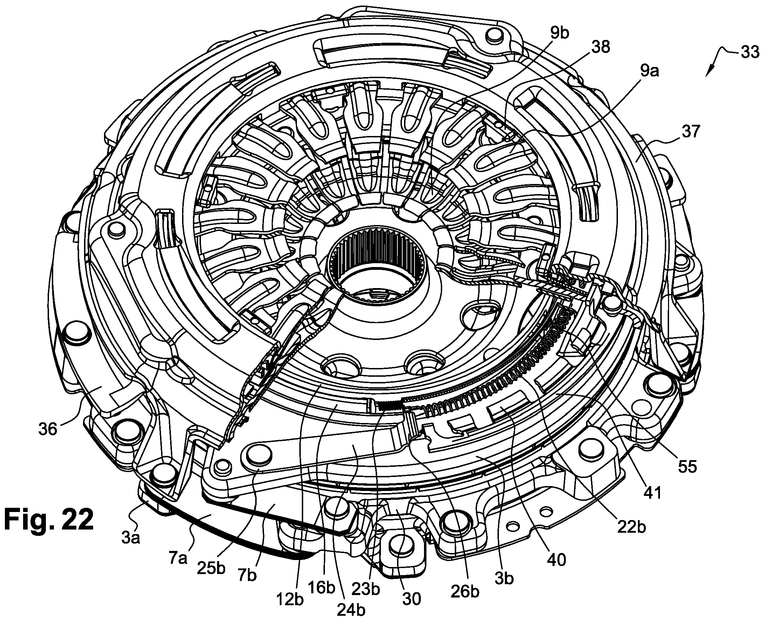

- la figure 22 est une vue en perspective et en coupe partielle, montrant les moyens de rattrapage de jeu équipant le second embrayage,

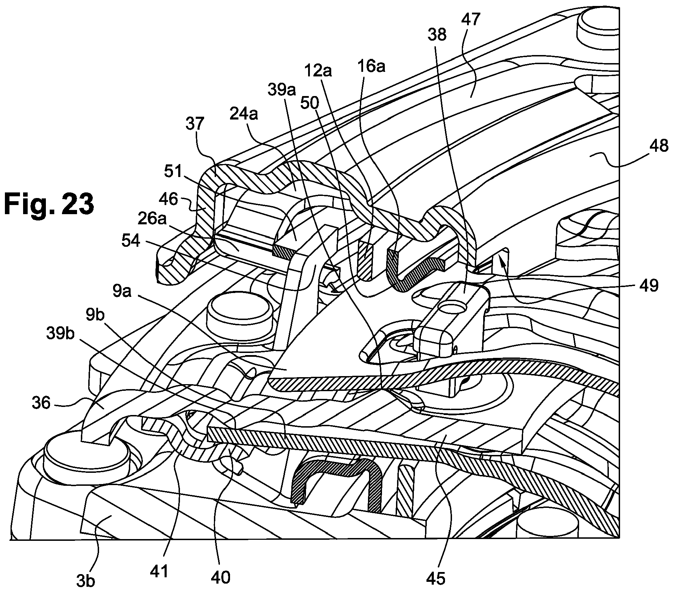

- la figure 23 est une vue de détail, en perspective et en coupe, d'une partie du double embrayage.

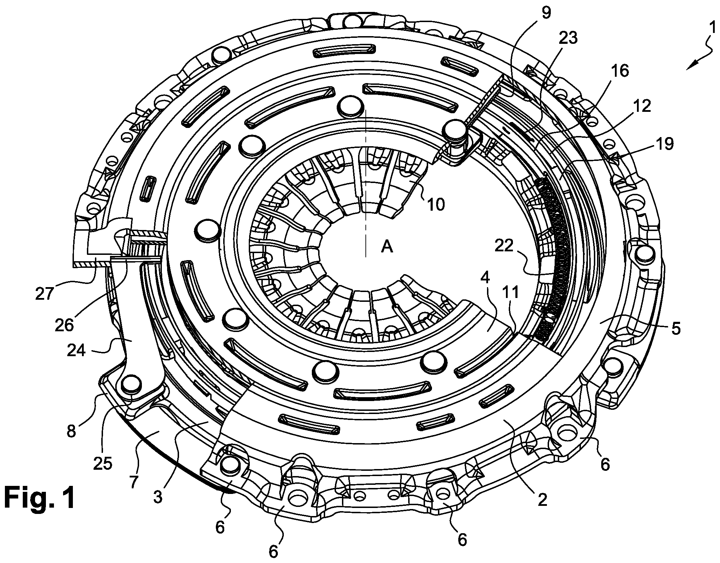

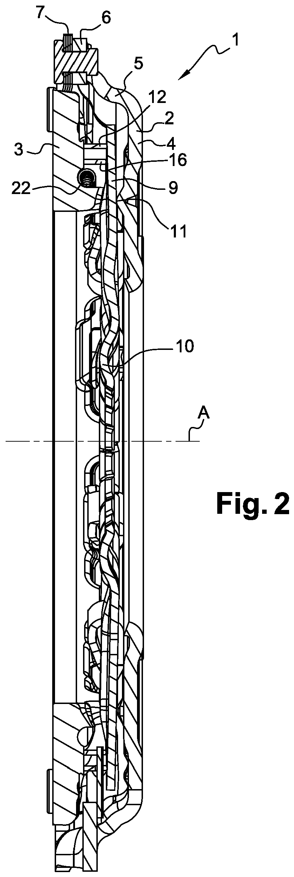

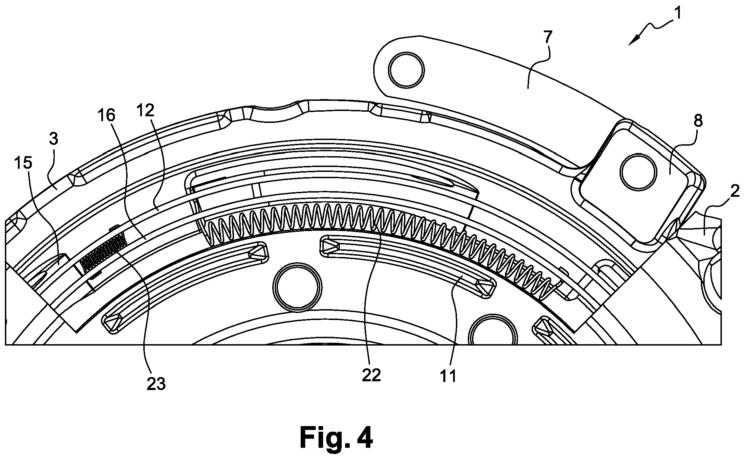

Un dispositif d'embrayage 1, notamment pour véhicule automobile, selon une première forme de réalisation de l'invention est illustré aux figures 1 à 4, et comporte un couvercle 2 en forme de cloche, d'axe A, à l'intérieur duquel est monté un plateau de pression 3 destiné à venir en appui sur un disque de friction du dispositif d'embrayage.

Le couvercle 2 comporte une partie annulaire 4 s'étendant radialement, une partie périphérique radialement externe 5, s'étendant vers l'arrière, comportant des pattes 6 dont certaines permettent la fixation du couvercle 2 à un organe axialement fixe du dispositif d'embrayage et dont d'autres permettent la fixation de languettes élastiques 7.

Plus particulièrement, plusieurs groupes de languettes 7 empilées les unes sur les autres peuvent être fixés entre le couvercle 2 et le plateau de pression 3. Chaque languette 7 d'un même groupe est alors fixée à des pattes 6 du couvercle 2, à une première extrémité, et à des pattes 8 du plateau de pression 3, à une seconde extrémité. Cette fixation est assurée par l'intermédiaire de rivets.

De cette manière, le plateau de pression 3 est soumis à un effort de rappel important, compris par exemple entre 0 et 600 N, (dans le cas d'un véhicule de tourisme) ou compris entre 0 et 2000 N (dans le cas d'un véhicule industriel), dirigé axialement vers l'avant. Le plateau de pression 3 est ainsi rappelé vers une position dite de débrayage, dans laquelle il est écarté du disque de friction.

Un diaphragme 9 est intercalé axialement entre le couvercle 2 et le plateau de pression 3 et sert à l'actionnement du plateau de pression 3 entre une position totalement embrayée dans laquelle ledit plateau de pression 3 est poussé contre le disque de friction, et une position totalement débrayée dans laquelle ledit plateau de pression 3 est écarté du disque de friction par l'intermédiaire des languettes élastiques 7.

Le diaphragme 9 est annulaire et comporte, à sa périphérie radialement interne, des doigts 10 s'étendant radialement vers l'intérieur. Ces doigts 10 sont destinés à coopérer avec une butée d'embrayage, comme cela est bien connu en soi.

Le diaphragme 9 prend en outre appui sur des zones 11 en saillie du couvercle, de manière à ce qu'il se déforme et pivote autour desdites zones 11, en fonctionnement.

Des moyens de rattrapage d'usure et de détection sont intercalés axialement entre le plateau de pression et le diaphragme. Plus particulièrement, le diaphragme 9 vient coopérer avec lesdits moyens de rattrapage d'usure et de détection dans une zone située radialement à l'extérieur des zones d'appui 11 du couvercle 2.

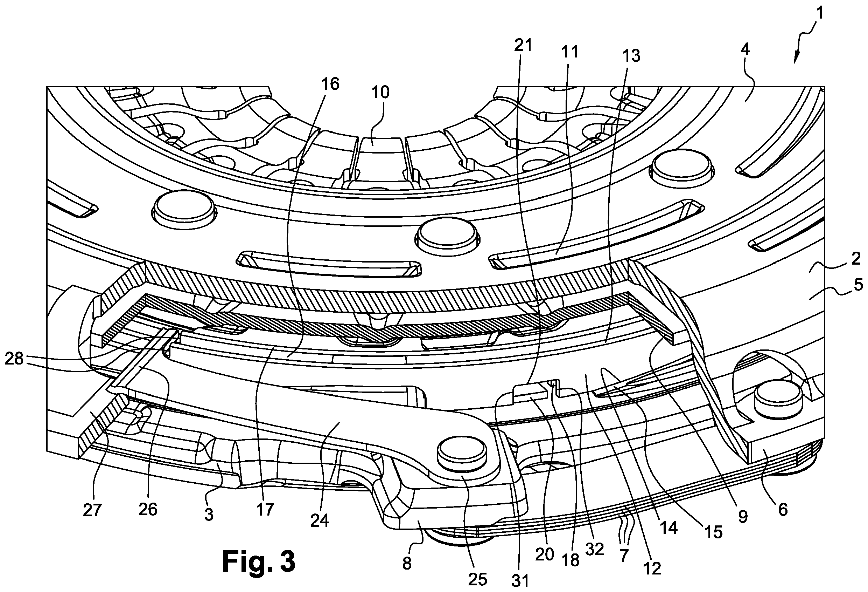

Ces moyens comportent un organe de rattrapage mobile 12 se présentant sous la forme d'un anneau comportant une extrémité 13 (figure 3) contre laquelle le diaphragme 9 est apte à venir en appui, et une extrémité comportant au moins une rampe 14 s'étendant circonférentiellement, coopérant avec une contre-rampe associée 15 ménagée directement sur le plateau de pression 3.

Les moyens précités comportent également un organe de détection 16 mobile se présentant sous la forme d'un anneau comportant une extrémité 17 contre laquelle le diaphragme est apte à venir en appui, et une extrémité comportant au moins une rampe 18 s'étendant circonférentiellement, coopérant avec la contre-rampe 15 du plateau de pression 3.

A titre d'exemple, l'angle 14, 18 des rampes desdits organes mobiles 12, 16 et de la contre-rampe 15 du plateau de pression 3 est compris entre 2 et 12°.

Les deux organes mobiles 12, 16 sont concentriques et séparés l'un de l'autre par des plots 19 de centrage et d'écartement (figure 1). Dans la forme de réalisation représentée aux figures 1 à 4, l'organe de détection mobile 16 est situé radialement à l'intérieur de l'organe de rattrapage mobile 12. En variante, les positions respectives desdits organes mobiles 12, 16 peuvent être inversées.

Comme cela est mieux visible à la figure 3, l'organe de détection 16 comporte au moins une patte 20 s'étendant radialement vers l'extérieur et engagée dans une encoche 21 de l'organe de rattrapage 12, de façon à limiter le déplacement angulaire de l'organe de rattrapage 12 par rapport à l'organe de détection 16 à une plage angulaire déterminée, et réciproquement. Le déplacement angulaire autorisé par une telle butée angulaire est par exemple compris entre 0 et 5°.

Un premier ressort de traction 22 s'étendant circonférentiellement est monté entre l'organe de détection 16 et le couvercle 2 ou le plateau de pression 3. On rappelle que le plateau de pression 3 est couplé en rotation au couvercle 2, par l'intermédiaire des languettes élastiques 7.

Un second ressort de traction 23 s'étendant circonférentiellement est monté entre l'organe de détection 16 et l'organe de rattrapage 12. On notera que la longueur du premier ressort 22 est supérieure à celle du second ressort 23, de façon à pouvoir solliciter le déplacement de l'organe de détection 16 sur une grande plage angulaire (par exemple de l'ordre de 120°).

L'ensemble 1 selon l'invention comporte également un organe presseur 24 se présentant sous la forme d'une languette élastique exerçant un effort axial. Ladite languette 24 est fixée par rivetage au plateau de pression 3, à une première extrémité 25, et vient en appui, à une seconde extrémité 26, sur l'extrémité correspondante 17 de l'organe de détection 16, de façon à le contraindre en appui sur le plateau de pression 3. Un jeu est formé axialement entre la seconde extrémité 26 de la languette 24 et l'organe de rattrapage 12.

La seconde extrémité 26 de la languette 24 est apte à coopérer avec une butée fixe, ici une butée 27 du couvercle 2, lorsque le déplacement du plateau de pression 3 est important, c'est-à-dire lorsqu'il existe une usure importante des garnitures du disque de friction et/ou des contre-matériaux des plateaux de pression et de réaction.

Cette seconde extrémité 26 de la languette 24 forme également une butée angulaire, destinée à coopérer avec des surfaces radiales des organes mobiles 12, 16, de manière à assurer le bon positionnement angulaire desdits organes mobiles 12, 16 avant montage de l'ensemble sur le dispositif d'embrayage. Cette butée angulaire n'intervient pas après montage. Cette butée peut toutefois être utilisée en tant que butée de fin de vie.

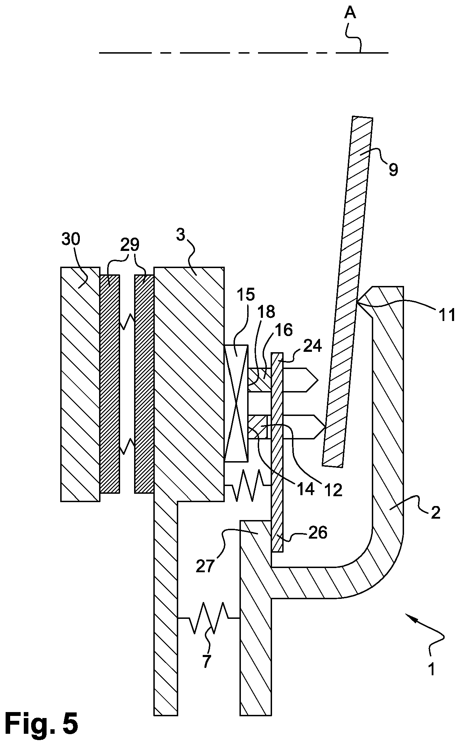

Comme cela est illustré schématiquement à la figure 5, les moyens de rattrapage et de détection d'usure sont inopérants lorsque les garnitures 29 du disque de friction ne sont pas ou peu usées et que les contre-matériaux des plateaux de pression 3 et de réaction 30 associés ne sont pas usés, par exemple lorsque l'usure axiale cumulée est inférieure à 0,015 mm.

En position totalement embrayée notamment, illustrée à la figure 5, le diaphragme 9 vient en appui sur l'organe de rattrapage 12, de façon à repousser le plateau de pression 3 à l'encontre des languettes élastiques de rappel 7. Le plateau de pression 3 et le plateau de réaction 30 correspondant (axialement fixe) enserrent alors le disque de friction portant les garnitures 29.

Dans cette position, la seconde extrémité 26 de la languette 24 affleure la butée 27 du couvercle 2. En d'autres termes, en l'absence d'usure prononcée, la languette 24 et/ou le diaphragme 9 maintiennent l'organe de détection 16 et l'organe de rattrapage 12 en appui sur le plateau de pression 3, quelle que soit la phase de fonctionnement du dispositif d'embrayage (embrayage/débrayage). Dans ce cas, le couple résistant généré par le frottement entre lesdits organes 12, 16 et le plateau de pression 3 est supérieur au couple exercé par les ressorts 22, 23. Lesdits organes 12, 16 sont donc immobilisés en rotation par rapport au plateau de pression 3, quelle que soit la phase de fonctionnement du dispositif d'embrayage.

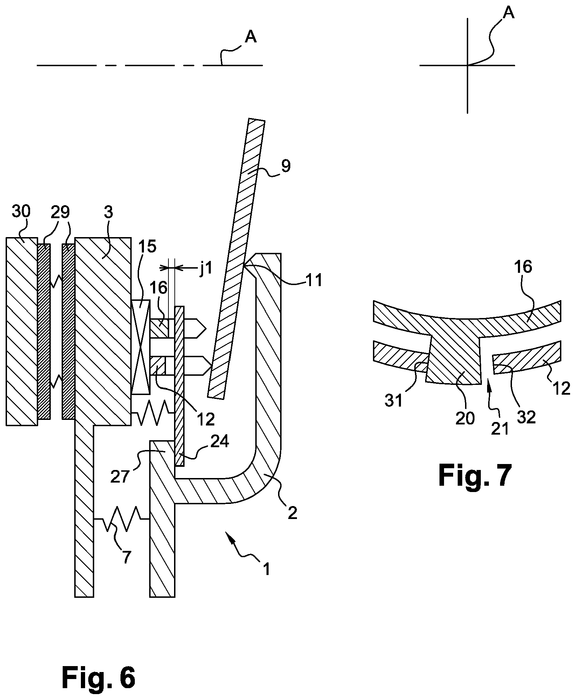

Les figures 6 à 15 illustrent le cas où les garnitures 29 du disque de friction (ou encore les contre-matériaux des plateaux de pression 3 et de réaction 30) présentent une usure importante, qu'il est nécessaire de rattraper afin d'éviter un disfonctionnement du dispositif d'embrayage.

Dans ce cas, comme illustré à la figure 6, la seconde extrémité 26 de la languette 24 vient en appui sur la butée 27 du couvercle 2, en position complètement embrayée, et se décolle de l'extrémité correspondante de l'organe de détection 16. Un jeu j1 se forme donc entre ladite extrémité de l'organe de détection 16 et la seconde extrémité 26 de la languette 24. On notera que, dans cette position, la patte 20 de l'organe de détection 16 est en appui sur une première extrémité 31 de l'encoche 21 ménagée dans l'organe de rattrapage 12.

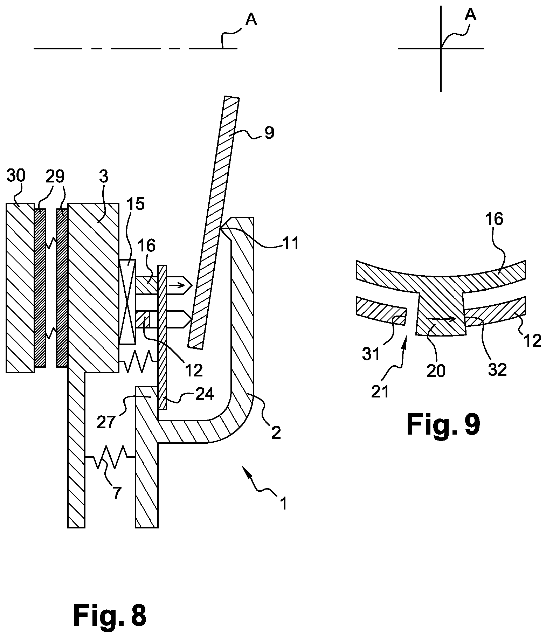

L'organe de détection 16, qui n'est alors plus soumis à un effort axial, est entraîné en rotation par le premier ressort 22, de façon à combler au moins partiellement le jeu j1, comme illustré à la figure 8. La rotation de l'organe de détection 16 est stoppée lorsque l'extrémité correspondante de l'organe de détection 16 vient à nouveau en appui sur la seconde extrémité 26 de la languette 24 (faible jeu à rattraper) ou lorsque la patte 20 de l'organe de détection 16 vient en appui sur la seconde extrémité 32 de l'encoche 21 ménagée dans l'organe de rattrapage 12 (figure 9, jeu à rattraper plus important).

On notera que, durant cette phase, l'organe de rattrapage 12 est maintenu en appui sur le plateau de pression 3 par le diaphragme 9. Il est donc immobilisé en rotation par rapport au plateau de pression 3.

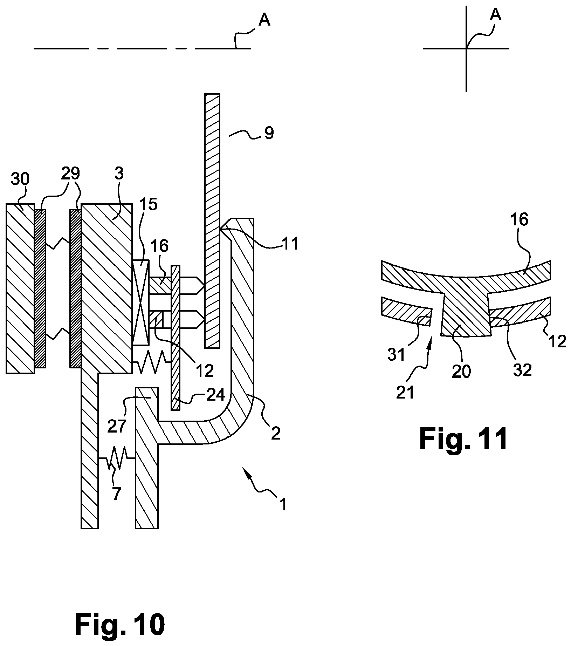

Lors de la phase de débrayage suivante, le diaphragme 9 transfère son appui de l'organe de rattrapage 12 vers l'organe de détection 16. Les figures 10 et 11 sont des vues illustrant les positions de ces éléments lors d'un tel transfert. Lors d'un tel débrayage, le plateau de pression 3 est écarté du plateau de réaction 30 par l'intermédiaire des languettes de rappel 7 correspondantes, de manière à libérer le disque de friction.

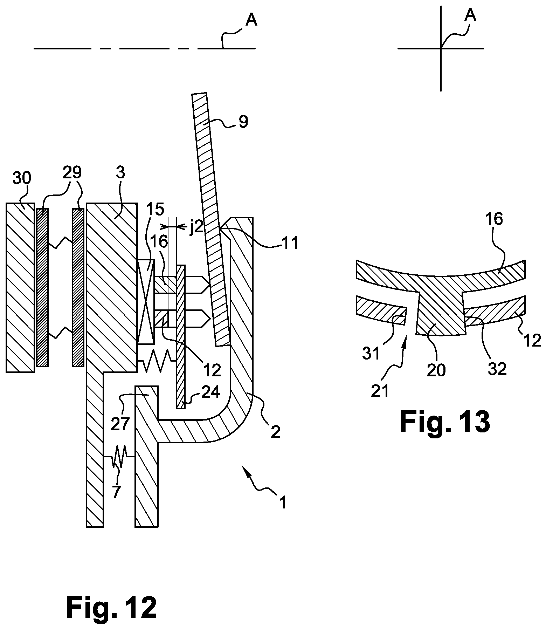

Comme illustré aux figures 12 et 13, lorsque le diaphragme 9 est en position totalement débrayée, il libère totalement l'organe de rattrapage 12.

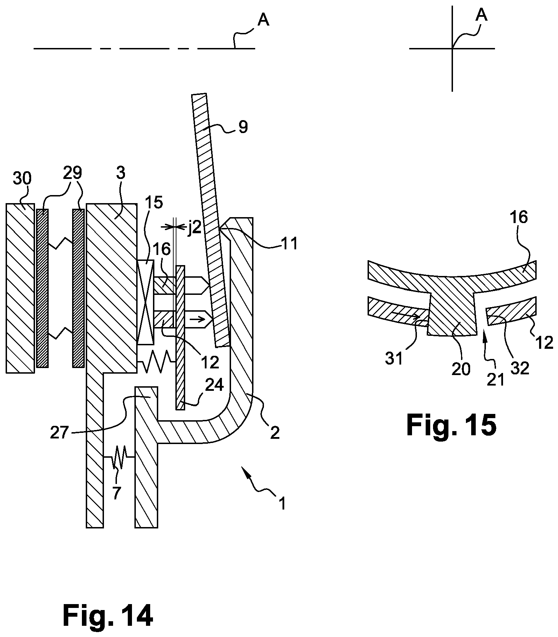

Dans cette position, l'organe de détection 16 est maintenu fixe en rotation par appui sur le diaphragme 9 et sur le plateau de pression 3, sous l'effet des languettes de rappel 7. Par ailleurs, la languette 24 est écartée de la butée 27 et de l'organe de rattrapage 12. L'organe de rattrapage 12, contraint par le second ressort 23, est donc entraîné en rotation de manière à combler au moins en partie le jeu j2 entre ledit organe de rattrapage 12 et la languette 24 (figure 14).

La rotation de l'organe de rattrapage est stoppée lorsque la patte 20 de l'organe de détection 16 vient en appui sur la seconde extrémité 32 de l'encoche 21 ménagée dans l'organe de rattrapage 12 (cas illustré à la figure 15).

Le pivotement de l'organe de rattrapage 12 et de l'organe de détection 16 par rapport au plateau de pression 3 permet, par l'intermédiaire des rampes 14, 18 et de la contre-rampe 15, d'augmenter la distance axiale entre le plateau de pression 3 et la zone d'appui du diaphragme 9 sur lesdits organes 12, 16, ce qui permet de compenser progressivement l'usure des garnitures 29 du disque de friction et/ou l'usure des contre-matériaux des plateaux de pression 3 et de réaction 30.

Le dispositif permet également de conserver l'angle de fonctionnement du diaphragme 9, de manière à maintenir un effort de précharge constant et réduire les contraintes mécaniques.

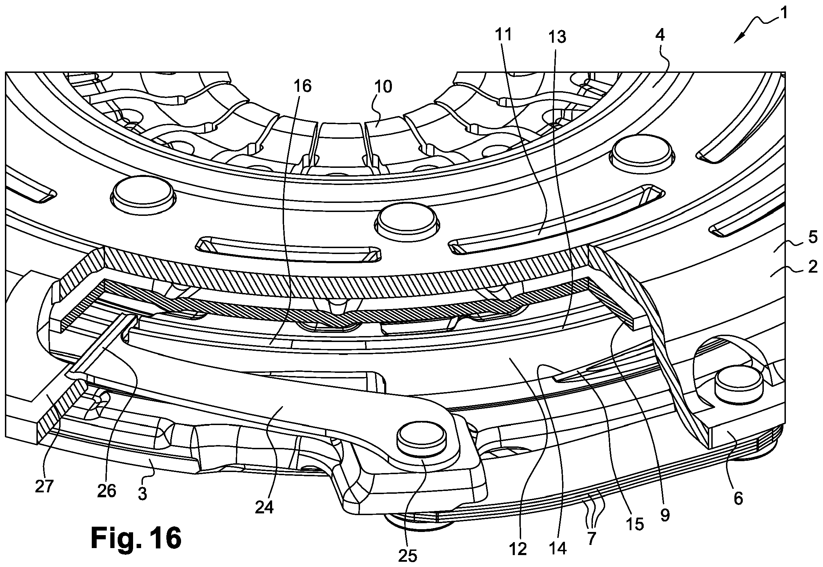

La figure 16 illustre une autre forme de réalisation de l'invention, se distinguant de celle exposée précédemment en ce que l'organe de détection 16 est dépourvu de patte insérée dans une encoche de l'organe de rattrapage de jeu 12. Cette forme de réalisation ne comporte donc pas de moyens de butée aptes à limiter le débattement angulaire d'un organe par rapport à l'autre en fonctionnement. Comme vu précédemment, en fonctionnement, ce débattement est tout de même limité par l'appui de chacun des organes précités 12, 16 sur la seconde extrémité 26 languette 24. Le fonctionnement de tels moyens de rattrapage et de détection de jeu est identique à celui décrit précédemment, à l'exception du fait que, pour chaque déplacement de l'organe de rattrapage 12 ou de l'organe de détection 16, la totalité du jeu j1 ou j2 entre l'organe correspondant 12, 16 et la languette 24 est comblé, le déplacement dudit organe 12, 16 étant stoppé lorsque son extrémité correspondante vient en appui sur la seconde extrémité 26 de ladite languette 24.

Les figures 17 à 23 illustrent un double embrayage 33 selon une forme de réalisation de l'invention, destiné à coupler un moteur avec un premier et un second arbre d'entrée d'une boîte de vitesses (non représentés). Le double embrayage 33 comporte des premier et second embrayages 34a, 34b (également appelés mécanismes d'embrayage) de passage de rapports de parités différentes.

Le premier embrayage 34a comporte un premier plateau de pression 3a et un plateau de réaction 30 entre lesquels s'étend un premier disque de friction 35a. Le premier plateau de pression 3a est couplé en rotation au plateau de réaction 30 et est mobile en translation par rapport à celui-ci, entre une position embrayée et une position débrayée, dans lesquelles il serre le premier disque de friction 35a sur le plateau de réaction 30, ou respectivement libère le premier disque de friction 35a.

Le plateau de réaction 30 est fixé sur un couvercle 36, lui-même destiné à être couplé à l'arbre du moteur. Le premier disque de friction 35a est destiné à être couplé au premier arbre d'entrée de la boîte de vitesses. Ainsi, en position embrayée du premier embrayage 34a, l'arbre du moteur est couplé au premier arbre d'entrée de la boîte de vitesses.

Le premier plateau de pression 3a est fixé sur un couvercle 37 mobile en translation par rapport au plateau de réaction 30 et au couvercle 36, et s'étendant vers l'avant. Des premières languettes élastiques de rappel 7a sont montées entre des pattes du premier plateau de pression 3a et des pattes du plateau de réaction 30.

Un premier diaphragme 9a est monté basculant sur le couvercle 36, par l'intermédiaire de rivets 38 assurant le centrage dudit diaphragme 9a tout en autorisant son basculement. Le premier diaphragme 9a se présente sous la forme d'une tôle annulaire élastique prenant appui sur le couvercle 36 au niveau de zones d'appui 39a, le premier diaphragme 9a basculant autour de cette zone d'appui 39a. La zone d'appui 39a est formée par une partie en saillie du couvercle 36.

La commande du premier embrayage 34a se fait classiquement au moyen d'une première butée d'embrayage (non représentée) coopérant avec la périphérie radialement interne du premier diaphragme 9a. Le premier diaphragme 9a forme un levier transmettant la force appliquée par la première butée de commande au premier plateau de pression 3a, par l'intermédiaire du couvercle mobile 37.

Afin de permettre le serrage efficace du premier disque de friction 35a, le premier diaphragme 9a est pré-chargé au repos. Sans cette pré-charge, le premier diaphragme 9a serait, au repos, dans un état d'élasticité requérant un début de course de la première butée de commande relativement important pour appliquer un effort de serrage efficace sur le premier disque de friction 35a. Lorsque la première butée d'embrayage est actionnée, elle équilibre la pré-charge du premier diaphragme 9a avant de commencer le serrage du premier disque de friction 35a. La pré-charge du premier diaphragme 9a permet de réduire la course d'approche de la première butée d'embrayage afin de serrer le premier disque de friction 35a, et d'avoir toujours un effort de précharge minimum, par exemple sur le roulement à billes de la premier butée d'embrayage et sur le roulement à billes qui supporte l'embrayage. On augmente ainsi la durée de vie desdits roulements et on limite les vibrations de l'embrayage.

Le premier embrayage 34a est du type normalement ouvert. La position de repos du premier diaphragme 9a correspond donc à un état débrayé du premier embrayage 34a. Le premier diaphragme 9a présente de préférence une portion du type rondelle de Belleville permettant de rappeler le premier diaphragme 9a vers sa position de repos.

En position de repos du premier diaphragme 9a, c'est-à-dire lorsque la première butée n'exerce pas ou peu d'effort sur le premier diaphragme 9a, le premier diaphragme 9a n'exerce donc pas (ou peu) d'effort sur le premier plateau de pression 3a. Le premier plateau de pression 3a est écarté du plateau de réaction 30 par l'intermédiaire des languettes élastiques 7a, de manière à libérer le premier disque de friction 35a.

Le second embrayage 34b comporte un second plateau de pression 3b, et un second disque de friction 35b s'étendant radialement entre le plateau de réaction 30 et le second plateau de pression 3b. Le même plateau de réaction 30 est ainsi utilisé pour les deux embrayages 34a, 34b, chaque disque de friction 35a, 35b étant disposé du côté de l'une des deux faces radiales d'appui du plateau de réaction 30. Des secondes languettes élastiques de rappel 7b sont montées entre des pattes du second plateau de pression 3b et des pattes du plateau de réaction 30.

Le second plateau de pression 3b est couplé en rotation au plateau de réaction 30 et est mobile en translation par rapport à celui-ci, entre une position embrayée et une position débrayée, dans lesquelles il serre le second disque de friction 35b sur le plateau de réaction 30, ou respectivement libère le second disque de friction 35b.

Le second disque de friction 35b est couplé au second arbre d'entrée de la boîte de vitesses. Ainsi, en position embrayée du second embrayage 34b, l'arbre du moteur est couplé au second arbre d'entrée de la boîte de vitesses.

Un second diaphragme 9b est monté basculant sur le couvercle 36. Le second diaphragme 9b se présente sous la forme d'une tôle annulaire élastique dont la périphérie externe est insérée dans un espace ménagé entre le couvercle 36 et des pattes élastiques 40 d'une rondelle d'appui 41, fixée au couvercle 36. Plus particulièrement, la périphérie radialement externe du second diaphragme 9b vient en appui sur des parties bombées des pattes 40 et sur des zones d'appui 39b en saillie du couvercle 36, autorisant ainsi le basculement le second diaphragme 9b.

La commande du second embrayage 34b se fait classiquement au moyen d'une seconde butée d'embrayage (non représentée) coopérant avec la périphérie radialement interne du second diaphragme 9b, par l'intermédiaire d'un organe de transmission d'effort (non représenté). Le second diaphragme 9b forme un levier transmettant la force appliquée par la seconde butée d'embrayage au second plateau de pression 3b, afin de permettre le serrage efficace du second disque de friction 35b.

Le second embrayage 34b est également du type normalement ouvert. En position de repos du second diaphragme 9b, c'est-à-dire lorsque la seconde butée de commande n'exerce pas ou peu d'effort sur le second diaphragme 9b, le second diaphragme 9b n'exerce pas (ou peu) d'effort sur le second plateau de pression 3b. Le second plateau de pression 3b est écarté du plateau de réaction 30 par l'intermédiaire des languettes élastiques 7b, de manière à libérer le second disque de friction 35b.

Le second diaphragme 9b, le second plateau de pression 3b et le second disque de friction 35b sont logés dans le couvercle 36. Le premier disque de friction 35a et le premier plateau de pression 3a sont logés dans un capot 42, fixe par rapport au couvercle 36 et au plateau de réaction 30.

Le couvercle 36 comporte, de l'arrière vers l'avant, des brides radiales 43 servant à la fixation sur le plateau de réaction 30, raccordées à une partie annulaire 44 entourant les éléments précités du second embrayage 34b, elle-même prolongée par une partie annulaire 45 s'étendant radialement vers l'intérieur. Les zones d'appui 39a, 39b sont formées dans la partie radiale 45 du couvercle 36.

Par ailleurs, le couvercle mobile 37 comporte une partie radialement externe 46 s'étendant vers l'avant depuis le premier plateau de pression 3a et entourant en partie le couvercle 36, prolongée à l'avant par une partie 47 s'étendant radialement vers l'intérieur, elle-même prolongée par un rebord cylindrique 48 s'étendant vers l'arrière.

Comme représenté à la figure 23, le bord libre 49 du rebord cylindrique 48 définit des faces sensiblement radiales aptes à servir à l'appui du premier diaphragme 9a afin de limiter son débattement lorsque le premier embrayage 34a est en position de stockage, c'est-à-dire avant montage du double embrayage 1 sur la boîte de vitesses.

On notera toutefois que ce n'est pas le cas à la figure 21 car la forme de créneau du bord 49 permet d'échapper les raidisseurs des doigts 10 du diaphragme 9 en fonctionnement et d'assurer le centrage de l'organe mobile de détection 16a de l'embrayage 34a.

Une fois le double embrayage 1 monté, le premier diaphragme 9a vient en appui sur les têtes des rivets 38, en position débrayée.

Afin de compenser l'usure du premier disque de friction 35a, du premier plateau de pression 3a et/ou du plateau de réaction 30, le premier embrayage 34a est équipé de premiers moyens de rattrapage et de détection d'usure.

Comme précédemment, les premiers moyens de rattrapage et de détection d'usure équipant le premier embrayage 34a sont intercalés axialement entre le premier plateau de pression 3a et le premier diaphragme 9a, plus précisément entre la partie radiale 47 du couvercle mobile 37 et le premier diaphragme 9a.

Les premiers moyens de rattrapage et de détection d'usure comportent un organe de rattrapage mobile 12a se présentant sous la forme d'un anneau comportant une extrémité contre laquelle le diaphragme 9a est apte à venir en appui, et une extrémité comportant au moins une rampe s'étendant circonférentiellement, coopérant avec une contre-rampe associée ménagée directement sur la partie radiale 47 du couvercle mobile 37.

Comme cela est mieux visible à la figure 21, les moyens de rattrapage et de détection d'usure comportent également un organe de détection mobile 16a se présentant sous la forme d'un anneau comportant une partie annulaire radialement interne 50 ayant une extrémité contre laquelle le diaphragme 9a est apte à venir en appui, et une extrémité comportant au moins une rampe s'étendant circonférentiellement, coopérant avec la contre-rampe de la partie radiale 47 du couvercle mobile 37. L'organe de détection 16a comporte en outre une partie annulaire radialement externe 51, rattachée à la partie radialement interne 50 par des pattes 52 s'étendant radialement.

A titre d'exemple, l'angle des rampes desdits organes mobiles 12a, 16a et de la contre-rampe du couvercle mobile 37 est compris entre 2 et 12°.

Les deux organes mobiles 12a, 16a sont concentriques et séparés l'un de l'autre.

Plus particulièrement, le centrage de l'organe mobile de détection 16a de l'embrayage 34a est réalisé au niveau du rebord cylindrique 48 du couvercle 37.

De plus, le centrage de l'organe mobile de rattrapage 12a est réalisé au niveau des pattes 53 directement sur l'organe mobile de détection 16a.

En outre, le centrage de l'organe mobile de détection 16b de l'embrayage 34b est réalisé par des plots situés sur le plateau de pression 3b à l'extérieur de 16b.

Le centrage de l'organe mobile de rattrapage 12b est réalisé par des pattes, s'étendant radialement vers l'extérieur, directement sur la partie radialement interne de l'organe mobile de détection 16b.

D'autres moyens de centrage, tels que des plots, peuvent être utilisés.

Dans la forme de réalisation représentée aux figures 17 à 23, l'organe de détection mobile 12a des premiers moyens de rattrapage et de détection d'usure est situé radialement à l'intérieur de l'organe de rattrapage mobile 16a correspondant. En variante, les positions respectives desdits organes mobiles 12a, 16a peuvent être inversées. On notera toutefois que la possibilité d'inversion des organes mobiles est liée à l'architecture interne du mécanisme. La condition à respecter est que l'organe mobile de détection (ici 16) doit être situé radialement entre l'organe mobile de rattrapage (ici 12) et le cordon de l'articulation du couvercle (ici 11)

Comme cela est mieux visible à la figure 21, l'organe de rattrapage 12a comporte au moins une patte 53 s'étendant axialement vers l'avant et engagée dans une encoche de l'organe de détection 16a ménagée dans l'une des pattes 52, de façon à limiter le déplacement angulaire de l'organe de rattrapage 12a par rapport à l'organe de détection 16a. Le déplacement angulaire autorisé par une telle butée angulaire est par exemple compris entre 0 et 5°.

Un premier ressort de traction 22a s'étendant circonférentiellement est monté entre l'organe de détection 16a et le couvercle mobile 37 (ou une partie liée en rotation au couvercle mobile 37).

Un second ressort de traction 23a s'étendant circonférentiellement est monté entre l'organe de détection 16a et l'organe de rattrapage 12a. Comme précédemment, la longueur du premier ressort 22a est supérieure à celle du second ressort 23a, de façon à pouvoir solliciter le déplacement de l'organe de détection 16a sur une grande plage angulaire (par exemple de l'ordre de 120°).

Le premier embrayage 34a comporte également un organe presseur se présentant sous la forme d'une languette élastique 24a exerçant un effort axial. Ladite languette 24a est fixée au couvercle mobile, à une première extrémité 25a, et vient en appui, à une seconde extrémité 26a, sur la partie annulaire radialement externe 51 de l'organe de détection 16a, de façon à le contraindre en appui sur la partie radiale 47 du couvercle mobile 37.

La seconde extrémité 26a de la languette 24a est apte à coopérer avec une butée fixe, ici formée par un crochet 54 s'étendant depuis la rondelle d'appui 41. La position de cette butée 54 est donc fixe par rapport au couvercle 36 et au plateau de réaction 30, la rondelle d'appui 41 étant fixée audit couvercle 36. La seconde extrémité de la languette est destinée à venir en appui sur le crochet 54 lorsque le déplacement du premier plateau de pression 3a est important, c'est-à-dire lorsqu'il existe une usure importante des garnitures 29a du premier disque de friction 35a et/ou des contre-matériaux du premier plateau de pression 3a et du plateau de réaction 30.

Afin de compenser l'usure du second disque de friction 35b, du second plateau de pression 3b et/ou du plateau de réaction 30, le second embrayage 34b est équipé de seconds moyens de rattrapage et de détection d'usure.

Comme précédemment, les seconds moyens de rattrapage et de détection d'usure équipant le second embrayage 34b sont intercalés axialement entre le second plateau de pression 3b et le second diaphragme 9b.

Les seconds moyens de rattrapage et de détection d'usure comportent un organe de rattrapage mobile 12b se présentant sous la forme d'un anneau comportant une extrémité contre laquelle le diaphragme 9b est apte à venir en appui, et une extrémité comportant au moins une rampe s'étendant circonférentiellement, coopérant avec une contre-rampe associée ménagée directement sur le second plateau de pression 3b.

Les seconds moyens de rattrapage et de détection d'usure comportent également un organe de détection mobile 16b se présentant sous la forme d'un anneau comportant une extrémité contre laquelle le second diaphragme 9b est apte à venir en appui, et une extrémité comportant au moins une rampe s'étendant circonférentiellement, coopérant avec la contre-rampe du second plateau de pression 3b.

A titre d'exemple, l'angle des rampes desdits organes mobiles 12b, 16b et de la contre-rampe du second plateau de pression 3b est compris entre 2 et 12°.

Les deux organes mobiles 12b, 16b sont concentriques et séparés l'un de l'autre par des plots de centrage et d'écartement. Dans la forme de réalisation représentée aux figures 17 à 23, l'organe de détection mobile 16b des seconds moyens de rattrapage et de détection d'usure est situé radialement à l'extérieur de l'organe de rattrapage mobile 12b correspondant. En variante, les positions respectives desdits organes mobiles 12b, 16b peuvent être inversées.

Comme cela est mieux visible à la figure 22, l'organe de rattrapage 12b comporte au moins une patte 55 s'étendant radialement vers l'extérieur et engagée dans une encoche de l'organe de détection 16b, de façon à limiter le déplacement angulaire de l'organe de rattrapage 12b par rapport à l'organe de détection 16b. Le déplacement angulaire autorisé par une telle butée angulaire est par exemple compris entre 0 et 5°.

Un premier ressort de traction 22b s'étendant circonférentiellement est monté entre l'organe de détection 16b et le second plateau de pression 3b (ou une partie liée en rotation au second plateau de pression 3b).

Un second ressort de traction 23b s'étendant circonférentiellement est monté entre l'organe de détection 16b et l'organe de rattrapage 12b. Comme précédemment, la longueur du premier ressort 22b est supérieure à celle du second ressort 23b, de façon à pouvoir solliciter le déplacement de l'organe de détection 16b sur une grande plage angulaire (par exemple de l'ordre de 120°).

Le second embrayage 34b comporte également un organe presseur se présentant sous la forme d'une languette élastique 24b exerçant un effort axial. Ladite languette 24b est fixée à une patte du second plateau de pression 3b, à une première extrémité 25b, et vient en appui, à une seconde extrémité 26b, sur l'extrémité correspondante de l'organe de détection 16b, de façon à le contraindre en appui sur le second plateau de pression 3b.

La seconde extrémité 26b de la languette 24b est apte à coopérer avec une butée fixe, ici formée par une partie de la rondelle d'appui 41. La position de cette butée est donc fixe par rapport au couvercle 36 et au plateau de réaction 30, la rondelle d'appui 41 étant fixée audit couvercle 36. La seconde extrémité 26b de la languette 24b est destinée à venir en appui sur cette butée lorsque le déplacement du second plateau de pression 3b est important, c'est-à-dire lorsqu'il existe une usure importante des garnitures 29b du second disque de friction 35b et/ou des contre-matériaux du second plateau de pression 3b et du plateau de réaction 30.

Le fonctionnement des premiers moyens de rattrapage de jeu et des seconds moyens de rattrapage de jeu est similaire à celui décrit précédemment en référence aux figures 5 à 15.

En effet, dans chaque cas, l'organe de rattrapage 12a, 12b est rendu inopérant lorsque les garnitures 29a, 29b du disque de friction 35a, 35b et/ou lorsque les contre-matériaux des plateaux de pression 3a, 3b et de réaction 30 associés ne sont pas ou peu usés, par exemple lorsqu'une telle usure cumulée est inférieure à 0,015 mm.

A l'inverse, en cas d'usure importante nécessitant un rattrapage de jeu, les organes de détection 16a, 16b et de rattrapage 12a, 12b sont déplacés lors des phases successives d'embrayage et de débrayage, de manière à compenser cette usure.

On notera que, dans chacune des formes de réalisation décrite ci-dessus, les moyens de rappel des plateaux de pression (formés par les languettes élastiques 7a, 7b) peuvent exercer un effort important, cet effort étant repris par l'organe de rattrapage mobile 12a, 12b puis par le diaphragme 9a, 9b, ou par l'organe de détection mobile 16a, 16b puis par le diaphragme 9a, 9b, en fonction de la position du diaphragme 9a, 9b. En effet, lors de leurs déplacements, lesdits organes mobiles 12a, 12b, 16a, 16b ne sont pas soumis à l'effort exercé par les moyens 7a, 7b de rappel du plateau de pression 3a, 3b et il est donc possible de solliciter aisément leur déplacement à l'aide des ressorts 22a, 22b, 23a, 23b, en cas d'usure.

Comme indiqué précédemment, le fait de disposer de moyens de rappel des plateaux de pression 3a, 3b exerçant des efforts importants, tels par exemple que des languettes ressorts 7a, 7b ayant une forte raideur, permet de limiter la transmission des vibrations axiales et d'éviter les phénomènes de pompage.

## Revendications

1. Dispositif d'embrayage, notamment pour véhicule automobile, comportant un plateau de pression (3) destiné à venir en appui sur un disque de friction du dispositif d'embrayage, un diaphragme (9) servant à l'actionnement du plateau de pression (3) entre une position totalement embrayée dans laquelle ledit plateau de pression (3) est poussé contre le disque de friction, et une position totalement débrayée dans laquelle ledit plateau de pression (3) est écarté du disque de friction par l'intermédiaire de moyens (7) de rappel du plateau de pression (3),
des moyens de rattrapage de l'usure du disque de friction étant intercalés entre le diaphragme (9) et le plateau de pression (3), lesdits moyens de rattrapage d'usure comportant au moins un organe de rattrapage (12) mobile dans une plage déterminée et comportant une rampe (14) coopérant avec une contre-rampe (15) tournée du côté du plateau de pression (3), de façon à ajuster la distance entre le diaphragme (9) et le plateau de pression (3) et compenser l'usure du disque de friction en fonction de la position de la rampe (14) par rapport à la contre-rampe (16),
des moyens de détection de l'usure aptes à autoriser le déplacement dudit organe mobile (12) des moyens de rattrapage d'usure en cas d'usure du disque de friction et aptes à empêcher un tel déplacement lorsque cette usure n'est pas suffisante, lesdits moyens de détection comportant au moins un organe de détection (16) mobile, dans une plage déterminée, par rapport à l'organe de rattrapage mobile (12) et comportant une rampe (18) coopérant avec une contre-rampe (15) tournée du côté du plateau de pression (3),
au moins un organe presseur (24) venant contraindre au moins la rampe (18) de l'organe de détection (16) contre la contre-rampe (15) associée, l'organe presseur (24) étant apte à coopérer avec une butée fixe (27) de manière à libérer lesdits organes mobiles (12, 16) lorsqu'une usure du disque de friction est détectée,
l'organe de rattrapage mobile (12) étant sollicité de façon à se déplacer lorsque ledit organe de rattrapage mobile (12) est libéré par le diaphragme (9),
l'organe de détection mobile (16) étant sollicité de façon à se déplacer et à rattraper, au moins en partie, le jeu (j1) entre celui-ci et l'organe presseur (24), lorsque ledit organe de détection mobile (16) est libéré par l'organe presseur (24) et par le diaphragme (9),
**caractérisé en ce que** le diaphragme (9) libère l'organe de détection mobile (16) et empêche le déplacement de l'organe de rattrapage mobile (12), en position complètement embrayée, et **en ce que** le diaphragme (9) libère l'organe de rattrapage mobile (12) et empêche le déplacement de l'organe de détection mobile (16), en position complètement débrayée, le diaphragme (9) venant toujours en appui sur l'un au moins desdits organes mobiles (12, 16) entre ses positions totalement embrayée et totalement débrayée.

2. Dispositif selon la revendication 1, **caractérisé en ce que** l'organe de détection mobile (16) se présente sous la forme d'un anneau comportant une extrémité (17) apte à venir en appui sur l'organe presseur (24) et sur le diaphragme (9), et une extrémité comportant au moins une rampe (18) s'étendant circonférentiellement, coopérant avec la contre-rampe associée (15) tournée du côté du plateau de pression (3).

3. Dispositif selon la revendication 1 ou 2, **caractérisé en ce que** l'organe de rattrapage mobile (12) se présente sous la forme d'un anneau comportant une extrémité (13) apte à venir en appui sur l'organe presseur (24) et sur le diaphragme, et une extrémité comportant au moins une rampe (14) s'étendant circonférentiellement, coopérant avec la contre-rampe associée (15) tournée du côté du plateau de pression (3).

4. Dispositif selon les revendications 2 et 3, **caractérisé en ce que** l'organe de rattrapage mobile (12) et l'organe de détection mobile (16) sont concentriques.

5. Dispositif selon l'une des revendications 1 à 4, **caractérisé en ce que** lesdits organes mobiles (12, 16) comportent des moyens de butée (20, 21) aptes à limiter le déplacement de l'organe de rattrapage mobile (12) par rapport à l'organe de détection mobile (16).

6. Dispositif selon les revendications 4 et 5, **caractérisé en ce que** les moyens de butée (20, 21) limitent la rotation de l'organe de rattrapage mobile (12) par rapport à l'organe de détection mobile (16) à une plage angulaire déterminée, et réciproquement.

7. Dispositif selon l'une des revendications 1 à 6, **caractérisé en ce que** l'organe de détection mobile (16) et/ou l'organe de rattrapage mobile (12) sont sollicités par des organes élastiques, par exemple des ressorts de traction (22, 23).

8. Dispositif selon l'une des revendications 1 à 7, **caractérisé en ce que** l'organe presseur (24) comporte au moins une butée angulaire (26) apte à coopérer avec l'organe de rattrapage mobile (12) et avec l'organe de détection mobile (16), de manière à assurer le bon positionnement angulaire desdits organes mobiles (12, 16) avant montage de l'ensemble (1) sur le dispositif d'embrayage.

9. Dispositif selon l'une des revendications 1 à 8, **caractérisé en ce que** le plateau de pression (3) comporte au moins une contre-rampe (15) coopérant à la fois avec la rampe (18) de l'organe de détection mobile (16) et avec la rampe (14) de l'organe de rattrapage mobile (12).

10. Dispositif selon l'une des revendications 1 à 9, **caractérisé en ce que** l'organe de rattrapage mobile (12) est conçu pour être déplacé par rapport à la contre-rampe associée (15), lorsqu'un effort nul ou quasi-nul, par exemple compris entre 0 et 600 N, est exercé par le diaphragme (9) sur l'organe de rattrapage mobile (12).

11. Dispositif selon l'une des revendications 1 à 10, **caractérisé en ce qu'**il comporte un couvercle (2) à l'intérieur duquel sont montés, au moins en partie, le plateau de pression (3) et le diaphragme (9), le diaphragme (9) étant intercalé entre le couvercle (2) et le plateau de pression (3).

12. Double embrayage (33), **caractérisé en ce qu'**il comporte au moins un dispositif selon l'une des revendications 1 à 11.

13. Double embrayage (33) selon la revendication 12, **caractérisé en ce qu'**il comporte au moins un plateau de réaction (30) destiné à être couplé en rotation à un arbre menant, un premier et un second disques de friction (35a, 35b), destinés à être couplés respectivement à un premier et un second arbres menés, un premier et un second plateaux de pression (3a, 3b), actionnés respectivement par un premier et un second diaphragmes (9a, 9b) de façon à serrer ou libérer le premier et le second disques de friction (35a, 35b) sur le plateau de réaction (30), le premier plateau de pression (3a) étant relié fixement à un couvercle (37) mobile en translation par rapport au plateau de réaction (30), et étant actionné par appui du premier diaphragme (9a) sur le couvercle mobile (37),
des premiers moyens de rattrapage de l'usure du premier disque de friction (35a) étant intercalés entre le premier diaphragme (9a) et le couvercle mobile (37), lesdits moyens de rattrapage d'usure comportant au moins un premier organe de rattrapage (12a) mobile dans une plage déterminée et comportant une rampe coopérant avec une contre-rampe tournée du côté du couvercle mobile (37), de façon à ajuster la distance entre le premier diaphragme (9a) et le premier plateau de pression (3a) et compenser l'usure du premier disque de friction (35a) en fonction de la position de ladite rampe par rapport à ladite contre-rampe,
des premiers moyens de détection de l'usure aptes à autoriser le déplacement dudit premier organe de rattrape mobile (12a) en cas d'usure du premier disque de friction (35a) et aptes à empêcher un tel déplacement lorsque cette usure n'est pas suffisante, lesdits premiers moyens de détection comportant au moins un premier organe de détection mobile (16a), dans une plage déterminée, par rapport au premier organe de rattrapage mobile (12a) et comportant une rampe coopérant avec une contre-rampe tournée du côté du couvercle mobile (37),
au moins un premier organe presseur (24a) venant contraindre au moins la rampe du premier organe de détection (16a) contre la contre-rampe associée, le premier organe presseur (24a) étant apte à coopérer avec une butée fixe (54) de manière à libérer lesdits premiers organes mobiles (12a, 16a) lorsqu'une usure du premier disque de friction (35a) est détectée,
le premier organe de rattrapage mobile (12a) étant sollicité de façon à se déplacer lorsque ledit premier organe de rattrapage mobile (12a) est libéré par le premier diaphragme (9a),
le premier organe de détection mobile (16a) étant sollicité de façon à se déplacer et à rattraper, au moins en partie, le jeu entre celui-ci et le premier organe presseur (24a), lorsque ledit premier organe de détection mobile (12a) est libéré par le premier organe presseur (24a) et par le premier diaphragme (9a),
le premier diaphragme (9a) libérant le premier organe de détection mobile (16a) et empêchant le déplacement du premier organe de rattrapage mobile (12a), en position complètement embrayée, le premier diaphragme (9a) libérant le premier organe de rattrapage mobile (12a) et empêchant le déplacement du premier organe de détection mobile (16a), en position complètement débrayée, le premier diaphragme (9a) venant toujours en appui sur l'un au moins desdits premiers organes mobiles (12a, 16a) entre ses positions totalement embrayée et totalement débrayée.

14. Double embrayage (33) selon la revendication 13, **caractérisé en ce qu'**il comporte des seconds moyens de rattrapage de l'usure du second disque de friction (35b), intercalés entre le second diaphragme (9b) et le second plateau de pression (3b), lesdits moyens de rattrapage d'usure comportant au moins un second organe de rattrapage (12b) mobile dans une plage déterminée et comportant une rampe coopérant avec une contre-rampe tournée du côté du second plateau de pression (3b), de façon à ajuster la distance entre le second diaphragme (9b) et le second plateau de pression (3b) et compenser l'usure du second disque de friction (35b) en fonction de la position de ladite rampe par rapport à ladite contre-rampe,
des seconds moyens de détection de l'usure aptes à autoriser le déplacement dudit second organe de rattrape mobile (12b) en cas d'usure du second disque de friction (35b) et aptes à empêcher un tel déplacement lorsque cette usure n'est pas suffisante, lesdits seconds moyens de détection comportant au moins un second organe de détection mobile (16b), dans une plage déterminée, par rapport au second organe de rattrapage mobile (12b) et comportant une rampe coopérant avec une contre-rampe tournée du côté du second plateau de pression (3b),
au moins un second organe presseur (24b) venant contraindre au moins la rampe du second organe de détection (16b) contre la contre-rampe associée, le second organe presseur (24b) étant apte à coopérer avec une butée fixe (41) de manière à libérer lesdits seconds organes mobiles (12b, 16b) lorsqu'une usure du second disque de friction (35b) est détectée,
le second organe de rattrapage mobile (12b) étant sollicité de façon à se déplacer lorsque ledit second organe de rattrapage mobile (12b) est libéré par le second diaphragme (9b),
le second organe de détection mobile (16b) étant sollicité de façon à se déplacer et à rattraper, au moins en partie, le jeu entre celui-ci et le second organe presseur (24b), lorsque ledit second organe de détection (16b) mobile est libéré par le second organe presseur (24b) et par le second diaphragme (9b),
le second diaphragme (9b) libérant le second organe de détection mobile (16b) et empêchant le déplacement du second organe de rattrapage mobile (12b), en position complètement embrayée, le second diaphragme (9b) libérant le second organe de rattrapage mobile (12b) et empêchant le déplacement du second organe de détection mobile (16b), en position complètement débrayée, le second diaphragme (9b) venant toujours en appui sur l'un au moins desdits seconds organes mobiles (12b, 16b) entre ses positions totalement embrayée et totalement débrayée.

15. Double embrayage (33) selon la revendication 13 ou 14, **caractérisé en ce que** chaque butée (51, 41) coopérant avec l'organe presseur (24a, 24b) correspondant est fixe par rapport au plateau de réaction (30).

16. Double embrayage (33) selon l'une des revendications 13 à 15, **caractérisé en ce qu'**il comporte un couvercle (36) en forme de cloche, logeant, au moins en partie, le second disque de friction (35b), le second plateau de pression (3b) et/ou le second diaphragme (9b).

17. Double embrayage (33) selon la revendication 16, **caractérisé en ce que** la périphérie radialement externe du second diaphragme (9b) est montée axialement entre une rondelle d'appui (41) et le couvercle (36), chaque butée fixe (51, 41) coopérant avec l'organe presseur (24a, 24b) correspondant étant formée sur ladite rondelle d'appui (41).

## Patentansprüche

1. Kupplungsvorrichtung, insbesondere für ein Kraftfahrzeug, die eine Druckplatte (3), die dazu bestimmt ist, auf einer Reibscheibe der Kupplungsvorrichtung in Auflage zu kommen, eine Federplatte (9), die zur Betätigung der Druckplatte (3) zwischen einer vollständig eingekuppelten Stellung, in der die Druckplatte (3) gegen die Reibscheibe gedrückt wird, und einer vollständig ausgekuppelten Stellung dient, in der die Druckplatte (3) mittels Rückstelleinrichtungen (7) der Druckplatte (3) von der Reibscheibe entfernt wird,
wobei Nachstelleinrichtungen des Verschleißes der Reibscheibe zwischen die Federplatte (9) und die Druckplatte (3) eingefügt sind, wobei die Verschleißnachstelleinrichtungen mindestens ein Nachstellorgan (12) aufweisen, das in einem bestimmten Bereich beweglich ist und eine Rampe (14) aufweist, die mit einer zur Seite der Druckplatte (3) weisenden Gegenrampe (15) zusammenwirkt, um den Abstand zwischen der Federplatte (9) und der Druckplatte (3) einzustellen und den Verschleiß der Reibscheibe abhängig von der Stellung der Rampe (14) bezüglich der Gegenrampe (16) zu kompensieren,
Einrichtungen zur Erfassung des Verschleißes, die die Verschiebung des beweglichen Organs (12) der Verschleißnachstelleinrichtungen im Fall des Verschleißes der Reibscheibe erlauben und eine solche Verschiebung verhindern können, wenn dieser Verschleiß nicht ausreichend ist, wobei die Erfassungseinrichtungen mindestens ein Erfassungsorgan (16) aufweisen, das in einem bestimmten Bereich bezüglich des beweglichen Nachstellorgans (12) beweglich ist und eine Rampe (18) aufweist, die mit einer zur Seite der Druckplatte (3) weisenden Gegenrampe (15) zusammenwirkt,
wobei mindestens ein Andrückorgan (24) mindestens die Rampe (18) des Erfassungsorgans (16) gegen die zugeordnete Gegenrampe (15) zwingt, wobei das Andrückorgan (24) mit einem ortsfesten Anschlag (27) zusammenwirken kann, um die beweglichen Organe (12, 16) freizugeben, wenn ein Verschleiß der Reibscheibe erfasst wird,
wobei das bewegliche Nachstellorgan (12) so beansprucht wird, dass es sich verschiebt, wenn das bewegliche Nachstellorgan (12) von der Federplatte (9) freigegeben wird,
wobei das bewegliche Erfassungsorgan (16) so beansprucht wird, dass es sich verschiebt und zumindest zum Teil das Spiel (j1) zwischen ihm und dem Andrückorgan (24) nachstellt, wenn das bewegliche Erfassungsorgan (16) vom Andrückorgan (24) und von der Federplatte (9) freigegeben wird, **dadurch gekennzeichnet, dass** die Federplatte (9) in der vollständig eingekuppelten Stellung das bewegliche Erfassungsorgan (16) freigibt und die Verschiebung des beweglichen Nachstellorgans (12) verhindert, und dass die Federplatte (9) in der vollständig ausgekuppelten Stellung das bewegliche Nachstellorgan (12) freigibt und die Verschiebung des beweglichen Erfassungsorgans (16) verhindert, wobei die Federplatte (9) zwischen ihren vollständig eingekuppelten und vollständig ausgekuppelten Stellungen immer auf mindestens einem der beweglichen Organe (12, 16) in Auflage kommt.

2. Vorrichtung nach Anspruch 1, **dadurch gekennzeichnet, dass** das bewegliche Erfassungsorgan (16) in Form eines Rings vorliegt, der ein Ende (17), das sich auf das Andrückorgan (24) und auf die Federplatte (9) auflegen kann, und ein Ende aufweist, das mindestens eine sich in Umfangsrichtung erstreckende Rampe (18) aufweist, die mit der zur Druckplatte (3) weisenden zugeordneten Gegenrampe (15) zusammenwirkt.

3. Vorrichtung nach Anspruch 1 oder 2, **dadurch gekennzeichnet, dass** das bewegliche Nachstellorgan (12) in Form eines Rings vorliegt, der ein Ende (13), das sich auf das Andrückorgan (24) und auf die Federplatte auflegen kann, und ein Ende aufweist, das mindestens eine sich in Umfangsrichtung erstreckende Rampe (14) aufweist, die mit der zur Druckplatte (3) weisenden zugeordneten Gegenrampe (15) zusammenwirkt.

4. Vorrichtung nach den Ansprüchen 2 und 3, **dadurch gekennzeichnet, dass** das bewegliche Nachstellorgan (12) und das bewegliche Erfassungsorgan (16) konzentrisch sind.

5. Vorrichtung nach einem der Ansprüche 1 bis 4, **dadurch gekennzeichnet, dass** die beweglichen Organe (12, 16) Anschlageinrichtungen (20, 21) aufweisen, die die Verschiebung des beweglichen Nachstellorgans (12) bezüglich des beweglichen Erfassungsorgans (16) begrenzen können.

6. Vorrichtung nach den Ansprüchen 4 und 5, **dadurch gekennzeichnet, dass** die Anschlageinrichtungen (20, 21) die Drehung des beweglichen Nachstellorgans (12) bezüglich des beweglichen Erfassungsorgans (16) auf einen bestimmten Winkelbereich begrenzen und umgekehrt.

7. Vorrichtung nach einem der Ansprüche 1 bis 6, **dadurch gekennzeichnet, dass** das bewegliche Erfassungsorgan (16) und/oder das bewegliche Nachstellorgan (12) von elastischen Organen beansprucht werden, zum Beispiel von Zugfedern (22, 23).

8. Vorrichtung nach einem der Ansprüche 1 bis 7, **dadurch gekennzeichnet, dass** das Andrückorgan (24) mindestens einen Winkelanschlag (26) aufweist, der mit dem beweglichen Nachstellorgan (12) und mit dem beweglichen Erfassungsorgan (16) zusammenwirken kann, um die korrekte Winkelpositionierung der beweglichen Organe (12, 16) vor der Montage der Einheit (1) auf die Kupplungsvorrichtung zu gewährleisten.

9. Vorrichtung nach einem der Ansprüche 1 bis 8, **dadurch gekennzeichnet, dass** die Druckplatte (3) mindestens eine Gegenrampe (15) aufweist, die sowohl mit der Rampe (18) des beweglichen Erfassungsorgans (16) als auch mit der Rampe (14) des beweglichen Nachstellorgans (12) zusammenwirkt.

10. Vorrichtung nach einem der Ansprüche 1 bis 9, **dadurch gekennzeichnet, dass** das bewegliche Nachstellorgan (12) konzipiert ist, um bezüglich der zugeordneten Gegenrampe (15) verschoben zu werden, wenn eine Kraft gleich Null oder praktisch gleich Null, zum Beispiel zwischen 0 und 600 N, von der Federplatte (9) auf das bewegliche Nachstellorgan (12) ausgeübt wird.

11. Vorrichtung nach einem der Ansprüche 1 bis 10, **dadurch gekennzeichnet, dass** sie einen Deckel (2) aufweist, in dessen Innerem zumindest zum Teil die Druckplatte (3) und die Federplatte (9) montiert sind, wobei die Federplatte (9) zwischen den Deckel (2) und die Druckplatte (3) eingefügt ist.

12. Doppelkupplung (33), **dadurch gekennzeichnet, dass** sie mindestens eine Vorrichtung nach einem der Ansprüche 1 bis 11 aufweist.

13. Doppelkupplung (33) nach Anspruch 12, **dadurch gekennzeichnet, dass** sie mindestens eine Gegendruckplatte (30), die dazu bestimmt ist, in Drehung mit einer Antriebswelle gekoppelt zu sein, eine erste und eine zweite Reibscheibe (35a, 35b), die dazu bestimmt sind, mit einer ersten und einer zweiten Abtriebswelle gekoppelt zu sein, eine erste und eine zweite Druckplatte (3a, 3b) aufweist, die von einer ersten bzw. einer zweiten Federplatte (9a, 9b) betätigt werden, um die erste und die zweite Reibscheibe (35a, 35b) auf die Gegendruckplatte (30) pressen oder davon freizugeben, wobei die erste Druckplatte (3a) ortsfest mit einem Deckel (37) verbunden ist, der bezüglich der Gegendruckplatte (30) translationsbeweglich ist, und durch Auflage der ersten Federplatte (9a) auf den beweglichen Deckel (37) betätigt wird,
wobei erste Nachstelleinrichtungen des Verschleißes der ersten Reibscheibe (35a) zwischen die erste Federplatte (9a) und den beweglichen Deckel (37) eingefügt sind, wobei die Verschleißnachstelleinrichtungen mindestens ein erstes Nachstellorgan (12a) aufweisen, das in einem bestimmten Bereich beweglich ist und eine Rampe aufweist, die mit einer zum beweglichen Deckel (37) weisenden Gegenrampe zusammenwirkt, um den Abstand zwischen der ersten Federplatte (9a) und der ersten Druckplatte (3a) einzustellen und den Verschleiß der ersten Reibscheibe (35a) abhängig von der Stellung der Rampe bezüglich der Gegenrampe zu kompensieren,
wobei erste Erfassungseinrichtungen des Verschleißes, die die Verschiebung des ersten beweglichen Nachstellorgans (12a) im Fall eines Verschleißes der ersten Reibscheibe (35a) erlauben und eine solche Verschiebung verhindern können, wenn dieser Verschleiß nicht ausreichend ist, wobei die ersten Erfassungseinrichtungen mindestens ein erstes bewegliches Erfassungsorgan (16a), in einem bestimmten Bereich, bezüglich des ersten beweglichen Nachstellorgans (12a) aufweisen und eine Rampe aufweisen, die mit einer zur Seite des beweglichen Deckels (37) weisenden Gegenrampe zusammenwirkt,
wobei mindestens ein erstes Andrückorgan (24a) mindestens die Rampe des ersten Erfassungsorgans (16a) gegen die zugeordnete Gegenrampe zwingt, wobei das erste Andrückorgan (24a) mit einem ortsfesten Anschlag (54) zusammenwirken kann, um die ersten beweglichen Organe (12a, 16a) freizugeben, wenn ein Verschleiß der ersten Reibscheibe (35a) erfasst wird,
wobei das erste bewegliche Nachstellorgan (12a) so beansprucht wird, dass es sich verschiebt, wenn das erste bewegliche Nachstellorgan (12a) von der ersten Federplatte (9a) freigegeben wird,
wobei das erste bewegliche Erfassungsorgan (16a) so beansprucht wird, dass es sich verschiebt und zumindest zum Teil das Spiel zwischen diesem und dem ersten Andrückorgan (24a) nachstellt, wenn das erste bewegliche Erfassungsorgan (12a) vom ersten Andrückorgan (24a) und von der ersten Federplatte (9a) freigegeben wird,
wobei die erste Federplatte (9a) in der völlig eingekuppelten Stellung das erste bewegliche Erfassungsorgan (16a) freigibt und die Verschiebung des ersten beweglichen Nachstellorgans (12a) verhindert, wobei die erste Federplatte (9a) in der vollständig ausgekuppelten Stellung das erste bewegliche Nachstellorgan (12a) freigibt und die Verschiebung des ersten beweglichen Erfassungsorgans (16a) verhindert, wobei die erste Federplatte (9a) zwischen ihren vollständig eingekuppelten und vollständig ausgekuppelten Stellungen immer auf mindestens eines der ersten beweglichen Organe (12a, 16a) in Auflage kommt.

14. Doppelkupplung (33) nach Anspruch 13, **dadurch gekennzeichnet, dass** sie zweite Nachstelleinrichtungen des Verschleißes der zweiten Reibscheibe (35b), die zwischen die zweite Federplatte (9b) und die zweite Druckplatte (3b) eingefügt sind, wobei die Verschleißnachstelleinrichtungen mindestens ein zweites Nachstellorgan (12b) aufweisen, das in einem bestimmten Bereich beweglich ist und eine Rampe aufweist, die mit einer zur zweiten Druckplatte (3b) weisenden Gegenrampe zusammenwirkt, um den Abstand zwischen der zweiten Federplatte (9b) und der zweiten Druckplatte (3b) einzustellen und den Verschleiß der zweiten Reibscheibe (35b) abhängig von der Stellung der Rampe bezüglich der Gegenrampe zu kompensieren, zweite Erfassungseinrichtungen des Verschleißes, die die Verschiebung des zweiten beweglichen Nachstellorgans (12b) im Fall des Verschleißes der zweiten Reibscheibe (35b) erlauben und eine solche Verschiebung verhindern können, wenn dieser Verschleiß nicht ausreichend ist, wobei die zweiten Erfassungseinrichtungen mindestens ein zweites bewegliches Erfassungsorgan (16b), in einem bestimmten Bereich, bezüglich des zweiten beweglichen Nachstellorgans (12b) aufweisen, und eine Rampe aufweisen, die mit einer zur zweiten Druckplatte (3b) weisenden Gegenrampe zusammenwirkt,
mindestens ein zweites Andrückorgan (24b) aufweisen, das mindestens die Rampe des zweiten Erfassungsorgans (16b) gegen die zugeordnete Gegenrampe zwingt, wobei das zweite Andrückorgan (24b) mit einem ortsfesten Anschlag (41) zusammenwirken kann, um die zweiten beweglichen Organe (12b, 16b) freizugeben, wenn ein Verschleiß der zweiten Reibscheibe (35b) erfasst wird,
wobei das zweite bewegliche Nachstellorgan (12b) so beansprucht wird, dass es sich verschiebt, wenn das zweite bewegliche Nachstellorgan (12b) von der zweiten Federplatte (9b) freigegeben wird,
wobei das zweite bewegliche Erfassungsorgan (16b) so beansprucht wird, dass es sich verschiebt und zumindest zum Teil das Spiel zwischen diesem und dem zweiten Andrückorgan (24b) nachstellt, wenn das zweite bewegliche Erfassungsorgan (16b) vom zweiten Andrückorgan (24b) und von der zweiten Federplatte (9b) freigegeben wird,
wobei die zweite Federplatte (9b) in der vollständig eingekuppelten Stellung das zweite bewegliche Erfassungsorgan (16b) freigibt und die Verschiebung des zweiten beweglichen Nachstellorgans (12b) verhindert, wobei die zweite Federplatte (9b) in der vollständig ausgekuppelten Stellung das zweite bewegliche Nachstellorgan (12b) freigibt und die Verschiebung des zweiten beweglichen Erfassungsorgan (16b) verhindert, wobei die zweite Federplatte (9b) zwischen ihrer vollständig eingekuppelten und ihrer vollständig ausgekuppelten Stellung immer auf mindestens einem der zweiten beweglichen Organe (12b, 16b) in Auflage kommt.

15. Doppelkupplung (33) nach Anspruch 13 oder 14, **dadurch gekennzeichnet, dass** jeder mit dem entsprechenden Andrückorgan (24a, 24b) zusammenwirkende Anschlag (51, 41) bezüglich der Gegendruckplatte (30) ortsfest ist.

16. Doppelkupplung (33) nach einem der Ansprüche 13 bis 15, **dadurch gekennzeichnet, dass** sie einen Deckel (36) in Form einer Glocke aufweist, der zumindest zum Teil die zweite Reibscheibe (35b), die zweite Druckplatte (3b) und/oder die zweite Federplatte (9b) aufnimmt.

17. Doppelkupplung (33) nach Anspruch 16, **dadurch gekennzeichnet, dass** der radial äußere Umfang der zweiten Federplatte (9b) axial zwischen eine Auflagescheibe (41) und den Deckel (36) montiert wird, wobei jeder mit dem entsprechenden Andrückorgan (24a, 24b) zusammenwirkende ortsfeste Anschlag (51, 41) auf der Auflagescheibe (41) geformt ist.

## Claims

1. Clutch device, notably for a motor vehicle, comprising a pressure plate (3) intended to press against a friction disc of the clutch device, a diaphragm (9) used to cause the pressure plate (3) to move between a fully-engaged position in which the said pressure plate (3) is pushed against the friction disc, and a fully-released position in which the said pressure plate (3) is held away from the friction disc by pressure plate (3) return means (7),
wear compensation means that compensate for friction disc wear being interposed between the diaphragm (9) and the pressure plate (3), the said wear compensation means comprising at least a compensation member (12) able to move in a determined range and comprising a ramp (14) collaborating with a mating ramp (15) facing towards the pressure plate (3), so as to adjust the distance between the diaphragm (9) and the pressure plate (3) and compensate for friction disc wear according to the position of the ramp (14) with respect to the mating ramp (16),
wear detection means able to allow the said moving member (12) of the wear compensation means to move in the event of friction disc wear and able to prevent such movement when this wear is not sufficient, the said detection means comprising at least a detection member (16) able to move, in a determined range, with respect to the mobile compensation member (12) and comprising a ramp (18) collaborating with a mating ramp (15) facing towards the pressure plate (3),
at least one pressing member (24) forcing at least the ramp (18) of the detection member (16) against the associated mating ramp (15), the pressing member (24) being able to collaborate with a fixed end stop (27) so as to free the said mobile members (12, 16) when friction disc wear is detected,
the mobile compensation member (12) being urged to move when the said mobile compensation member (12) is freed by the diaphragm (9),
the mobile detection member (16) being urged to move and to compensate, at least in part, for the play (j1) between it and the pressing member (24) when the said mobile detection member (16) is freed by the pressing member (24) and by the diaphragm (9),
**characterized in that** the diaphragm (9) frees the mobile detection member (16) and prevents the mobile compensation member (12) from moving, in the fully-engaged position, and **in that** the diaphragm (9) frees the mobile compensation member (12) and prevents the mobile detection member (16) from moving in the fully-released position, the diaphragm (9) always pressing against at least one of the said mobile members (12, 16) between the fully-engaged and fully-released positions thereof.

2. Device according to Claim 1, **characterized in that** the mobile detection member (16) takes the form of an annulus comprising an end (17) able to come to press against the pressing member (24) and against the diaphragm (9), and an end comprising at least one circumferentially extending ramp (18) collaborating with the associated mating ramp (15) facing towards the pressure plate (3).

3. Device according to Claim 1 or 2, **characterized in that** the mobile compensation member (12) takes the form of an annulus comprising an end (13) able to come to press against the pressing member (24) and against the diaphragm, and an end comprising at least one circumferentially extending ramp (14) collaborating with the associated mating ramp (15) facing towards the pressure plate (3).

4. Device according to Claims 2 and 3, **characterized in that** the mobile compensation member (12) and the mobile detection member (16) are concentric.

5. Device according to one of Claims 1 to 4, **characterized in that** the said mobile members (12, 16) comprise end-stop means (20, 21) able to limit the movement of the mobile compensation member (12) with respect to the mobile detection member (16).

6. Device according to Claims 4 and 5, **characterized in that** the end-stop means (20, 21) limit the rotation of the mobile compensation member (12) with respect to the mobile detection member (16) to a determined angular range, and vice versa.

7. Device according to one of Claims 1 to 6, **characterized in that** the mobile detection member (16) and/or the mobile compensation member (12) are urged by elastic members, for example tension springs (22, 23).

8. Device according to one of Claims 1 to 7, **characterized in that** the pressing member (24) comprises at least one angular end stop (26) able to collaborate with the mobile compensation member (12) and with the mobile detection member (16) to ensure that the said mobile members (12, 16) are correctly angularly positioned before the assembly (1) is mounted on the clutch device.

9. Device according to one of Claims 1 to 8, **characterized in that** the pressure plate (3) comprises at least one mating ramp (15) collaborating both with the ramp (18) and the mobile detection member (16) and with the ramp (14) of the mobile compensation member (12).

10. Device according to one of Claims 1 to 9, **characterized in that** the mobile compensation member (12) is designed to be moved with respect to the associated mating ramp (15) when a zero or near-zero force, for example of between 0 and 600 N, is applied by the diaphragm (9) to the mobile compensation member (12).

11. Device according to one of Claims 1 to 10, **characterized in that** it comprises a housing (2) inside which the pressure plate (3) and the diaphragm (9) are at least partially mounted, the diaphragm (9) being interposed between the housing (2) and the pressure plate (3).

12. Dual clutch (33), **characterized in that** it comprises at least one device according to one of Claims 1 to 11.

13. Dual clutch (33) according to Claim 12, **characterized in that** it comprises at least a reaction plate (30) intended to be rotationally coupled to a driving shaft, a first and a second friction disc (35a, 35b) which are intended to be coupled respectively to a first and a second driven shaft, a first and a second pressure plate (3a, 3b) which are respectively made to move by a first and a second diaphragm (9a, 9b) so as to clamp or free the first and second friction discs (35a, 35b) against the reaction plate (30), the first pressure plate (3a) being fixedly connected to a housing (37) capable of translational movement with respect to the reaction plate (30) and being made to move by the first diaphragm (9a) pressing against the mobile housing (37),
first wear compensation means that compensate for wear of the first friction disc (35a) being interposed between the first diaphragm (9a) and the mobile housing (37), the said wear compensation means comprising at least a first compensation member (12a) able to move in a determined range and comprising a ramp collaborating with a mating ramp facing towards the mobile housing (37), so as to adjust the distance between the first diaphragm (9a) and the first pressure plate (3a) and compensate for wear of the first friction disc (35a) according to the position of the said ramp with respect to the said mating ramp,
first wear detection means able to allow the said first mobile compensation member (12a) to move in the event of wearing of the first friction disc (35a) and able to prevent such a movement when this wear is not sufficient, the said first detection means comprising at least a first mobile detection member (16a) able to move in a determined range with respect to the first mobile compensation member (12a) and comprising a ramp collaborating with a mating ramp facing towards the mobile housing (37),
at least one first pressing member (24a) forcing at least the ramp of the first detection member (16a) against the associated mating ramp, the first pressing member (24a) being able to collaborate with a fixed thrust bearing (54) so as to free the said first mobile members (12a, 16a) when wear of the first friction disc (35a) is detected,
the first mobile compensation member (12a) being urged to move when the said first mobile compensation member (12a) is freed by the first diaphragm (9a),
the first mobile detection member (16a) being urged to move and to compensate, at least in part, for the play between it and the first pressing member (24a), when the said first mobile detection member (12a) is freed by the first pressing member (24a) and by the first diaphragm (9a),
the first diaphragm (9a) freeing the first mobile detection member (16a) and preventing the first mobile compensation member (12a) from moving, in the fully-engaged position, the first diaphragm (9a) freeing the first mobile compensation member (12a) and preventing the first mobile detection member (16a) from moving in the fully-released position, the first diaphragm (9a) always pressing against at least one of the said first mobile members (12a, 16a) between the fully-engaged and fully-released positions thereof.

14. Dual clutch (33) according to Claim 13, **characterized in that** it comprises second wear compensation means that compensate for wear of the second friction disc (35b) interposed between the second diaphragm (9b) and the second pressure plate (3b), the said wear compensation means comprising at least a second compensation member (12b) able to move in a determined range and comprising a ramp collaborating with a mating ramp facing towards the second pressure plate (3b), so as to adjust the distance between the second diaphragm (9a) and the second pressure plate (3b) and compensate for wear of the second friction disc (35b) according to the position of the said ramp with respect to the said mating ramp,
second wear detection means able to allow the said second mobile compensation member (12b) to move in the event of wearing of the second friction disc (35b) and able to prevent such a movement when this wearing is not sufficient, the said second detection means comprising at least a second mobile detection member (16b) able to move in a determined range with respect to the second mobile compensation member (12b) and comprising a ramp collaborating with a mating ramp facing towards the second pressure plate (3b),
at least one second pressing member (24b) forcing at least the ramp of the second detection member (16b) against the associated mating ramp, the second pressing member (24b) being able to collaborate with a fixed thrust bearing (41) so as to free the said second mobile members (12b, 16b) when wear of the second friction disc (35b) is detected,
the second mobile compensation member (12b) being urged to move when the said second mobile compensation member (12b) is freed by the second diaphragm (9b),
the second mobile detection member (16b) being urged to move and to compensate, at least in part, for the play between it and the second pressing member (24b), when the said second mobile detection member (16b) is freed by the second pressing member (24b) and by the second diaphragm (9b),
the second diaphragm (9b) freeing the second mobile detection member (16b) and preventing the second mobile compensation member (12b) from moving, in the fully-engaged position, the second diaphragm (9b) freeing the second mobile compensation member (12b) and preventing the second mobile detection member (16b) from moving in the fully-released position, the second diaphragm (9b) always pressing against at least one of the said second mobile members (12b, 16b) between the fully-engaged and fully-released positions thereof.

15. Dual clutch (33) according to Claim 13 or 14, **characterized in that** each thrust bearing (51, 41) collaborating with the corresponding pressing member (24a, 24b) is fixed with respect to the reaction plate (30).

16. Dual clutch (33) according to one of Claims 13 to 15, **characterized in that** it comprises a housing (36) in the form of a bell housing at least partially housing the second friction disc (35b), the second pressure plate (3b) and/or the second diaphragm (9b).

17. Dual clutch (33) according to Claim 16, **characterized in that** the radially external periphery of the second diaphragm (9b) is mounted axially between a thrust washer (41) and the housing (36), each fixed thrust bearing (51, 41) collaborating with the corresponding pressing member (24a, 24b) being formed on the said thrust washer (41).
